# EUROPEAN PATENT APPLICATION

(11) **EP 4 715 586 A1**
(43) Date of publication of application: **25.03.2026**
(21) Application number: 24850494.6
(22) Date of filing: 13.03.2024
(51) Int. Cl.: G06F 9/451, G06F 3/04883, G06F 3/041, G06F 3/0485

(54) **DISPLAY METHOD AND ELECTRONIC DEVICE**

(30) Priority: 09.08.2023 CN 202311004443
(71) Applicant: Honor Device Co., Ltd., Shenzhen, Guangdong 518040 (CN)
(72) Inventor: MU, Weihu, Shenzhen, Guangdong 518040 (CN)
(74) Representative: Gill Jennings & Every LLP
(86) International application number: PCT/CN2024/081414
(87) International publication number: WO 2025/030834

(57) **Abstract**

A display method and an electronic device are provided. The method includes: obtaining a start event of a first operation of a user; displaying a first image in response to the start event of the first operation; obtaining a first move event of the first operation; and displaying a second image in response to the first move event when first duration is less than or equal to threshold duration. The first duration is a time difference between first detection time of the first move event and a first vertical synchronization signal, and the first vertical synchronization signal is a vertical synchronization signal after the first detection time and closest to the first detection time. The embodiments of this application can reduce response time, accelerate processing and display, and improve user experience.

## Description

This application claims priority to Chinese Patent Application No. 202311004443.3, filed with the China National Intellectual Property Administration on August 09, 2023, and entitled "DISPLAY METHOD AND ELECTRONIC DEVICE", which is incorporated herein by reference in its entirety.

### TECHNICAL FIELD

This application relates to the field of electronic technologies, and in particular, to a display method and an electronic device.

### BACKGROUND

In a process in which a user interacts with an electronic device, as a user operation changes, the electronic device refreshes a display interface according to the user operation. For example, when the electronic device displays a game interface, the user touches a screen to control a character movement on the game interface. As a touch operation of the user changes, the electronic device correspondingly refreshes and displays an image of the game interface. However, there is a delay between processes of image processing and display response of the electronic device, and the touch operation of the user cannot be quickly responded to in some scenarios, affecting user experience.

### SUMMARY

Embodiments of this application provide a display method and an electronic device, to reduce response time, accelerate processing and display, and improve user experience.

According to a first aspect, an embodiment of this application provides a display method. The method is applied to an electronic device, and includes: obtaining a start event of a first operation of a user; displaying a first image in response to the start event of the first operation; obtaining a first move event of the first operation; and displaying a second image in response to the first move event when first duration is less than or equal to threshold duration. The first duration is a time difference between first detection time of the first move event and a first vertical synchronization signal, and the first vertical synchronization signal is a vertical synchronization signal after the first detection time and closest to the first detection time.

The start event is an event that the first operation is detected for the first time; a move event is an event that a start event is an event that the first operation is detected for a non-first time; and an end event is an event that no first operation is detected for the first time. First detection information is located between the first vertical synchronization signal and the fourth vertical synchronization signal, the first vertical synchronization signal is the latter vertical synchronization signal in a first vertical synchronization signal periodicity, and the fourth vertical synchronization signal is the former vertical synchronization signal in the first vertical synchronization signal periodicity.

In this embodiment of this application, the electronic device determines, based on a time difference between detection time of a move event and a vertical synchronization signal immediately following the move event, whether to perform processing in advance. When the time difference is less than or equal to the threshold duration, the electronic device may be triggered in advance to perform a processing and display process in response to the move event. In this way, based on periodic display, the electronic device processes the move event as early as possible, thereby improving time validity of the move event, accelerating response and display, and improving a refresh rate, and in addition, this can improve user experience.

In a possible implementation, the method further includes: obtaining a second move event of the first operation when the first duration is greater than the threshold duration; and determining, in response to the second move event, whether second duration is less than or equal to the threshold duration. The second duration is a time difference between second detection time of the second move event and a second vertical synchronization signal, the second vertical synchronization signal is a vertical synchronization signal after the second detection time and closest to the second detection time, and the second detection time is after the first detection time.

Second detection information is located between the second vertical synchronization signal and the fifth vertical synchronization signal, the second vertical synchronization signal is the latter vertical synchronization signal in a second vertical synchronization signal periodicity, and the fifth vertical synchronization signal is the former vertical synchronization signal in the second vertical synchronization signal periodicity. Acquisition time of the first move event and acquisition time of the second move event are spaced by one acquisition periodicity, the first move event is earlier, and the second move event is later.

In this embodiment of this application, if the first duration is greater than the threshold duration, the electronic device does not trigger processing and display, but waits for a move event in a next acquisition periodicity, and continues to perform the foregoing determining and processing. In this way, it can be ensured that a periodicity in which a move event is processed is still a vertical synchronization signal periodicity, and the move event can be processed in advance, to accelerate a response speed of the move event, and a display refreshing periodicity of a user can be ensured, thereby improving user interaction experience.

In a possible implementation, the method further includes: detecting an input event of a user operation based on an acquisition periodicity; and when the electronic device does not detect the user operation at a first moment, determining that no input event of the user operation exists; and the obtaining a start event of a first operation of a user includes: when the electronic device detects the user operation at a second moment, and when a previous acquisition result is that no user operation is detected, obtaining the start event of the first operation, where the first moment and the second moment are spaced by one acquisition periodicity, and the first moment is before the second moment. In this way, the electronic device can effectively obtain the start event of the user operation according to the acquisition periodicity.

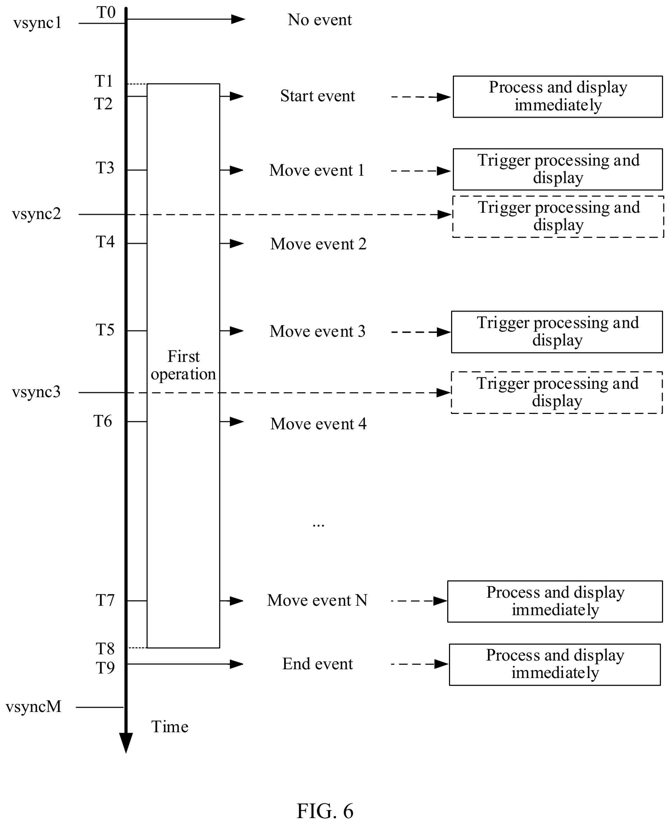

For the first moment, refer to a T0 moment in FIG. 6, and for the second moment, refer to a T2 moment in FIG. 6.

In a possible implementation, the obtaining a first move event of the first operation includes: when the electronic device detects the user operation at an X^{th} moment, and when a previous acquisition result is that the user operation is detected, obtaining the first move event of the first operation, where the X^{th} moment is after the second moment. In this way, the electronic device acquires the move event after the start event, thereby ensuring triggering the move event in advance, performing response and display, accelerating a processing speed of the move event, and improving user experience.

For the X^{th} moment, refer to related content of a T3 moment to a T7 moment in FIG. 6, and details are not described again.

In a possible implementation, the method further includes: when the electronic device detects the user operation at a K^{th} moment, and when a previous acquisition result is that the user operation is detected, obtaining a move event of the first operation; and when the electronic device detects no user operation at a (K+1)^{th} moment, and when a previous acquisition result is that the user operation is detected, obtaining an end event of the first operation. The K^{th} moment and the (K+1)^{th} moment are after the second moment, the K^{th} moment and the (K+1)^{th} moment are spaced by one acquisition periodicity, and the (K+1)^{th} moment is after the K^{th} moment.

For the K^{th} moment, refer to the T7 moment in FIG. 6.

In a possible implementation, the method further includes: when the first duration is greater than the threshold duration, waiting for detection in a next acquisition periodicity; and if the electronic device obtains a fourth move event at the K^{th} moment; and the electronic device detects no user operation at the (K+1)^{th} moment, determining that the fourth move event is a final move event, and displaying a third image. Fourth detection time of the fourth move event is before a third vertical synchronization signal, and the third vertical synchronization signal is a vertical synchronization signal after the fourth detection time and closest to the fourth detection time. In this way, the fourth move event is the final move event, and the electronic device can immediately process and display the third image.

In a possible implementation, when the end event of the first operation is obtained, the method further includes: displaying a fourth image in response to the end event. In this way, the electronic device can immediately display the fourth image in response to the end event, thereby ensuring time validity of image display.

In a possible implementation, the threshold duration is the acquisition periodicity. In this way, when the threshold duration is duration of the acquisition periodicity, the electronic device can process and display all move events in advance according to the vertical synchronization signal periodicity to the maximum extent without omission, and wait for a response of the vertical synchronization signal, thereby ensuring reliability of triggering in advance.

In a possible implementation, the method further includes: creating a first cache, where the first cache includes description information of a third move event; and after the obtaining a first move event of the first operation, the method further includes: obtaining description information of the first move event, where the description information includes detection time, coordinate information, and an event type of the first move event; and storing the description information of the first move event in the first cache. In this way, the electronic device may cache information about the move event in advance, to be triggered in advance subsequently based on the vertical synchronization signal and the threshold duration, to ensure that a response is triggered in advance while a display frequency is not increased, thereby reducing increase of processing processes, saving processing resources, and reducing energy consumption.

In a possible implementation, when the first duration is less than or equal to the threshold duration, the method further includes: determining a target move event from move events in the first cache; and performing image rendering and compositing based on the target move event, to obtain a second processed image, where the second image includes the second processed image. In this way, when the electronic device caches a condition of triggering in advance, the move events stored in the cache are combined and processed, thereby ensuring reliability of processing.

In a possible implementation, the electronic device includes an input framework module, an input event receiving module, and a display, and the creating a first cache includes: when the user operation is detected, if a cache is not created yet, creating the first cache by using the input event receiving module; and sending event information to the input framework module by using the input event receiving module; the obtaining description information of the first move event, and storing the description information of the first move event in a first cache includes: determining the description information of the first move event by using the input framework module based on the event information, and storing the description information of the first move event in the first cache; and sending an event storage notification to the input event receiving module by using the input framework module; and the displaying a second image when first duration is less than or equal to threshold duration includes: determining, by using the input event receiving module, that the first duration is less than or equal to the threshold duration, and displaying the second image by using the display. In this way, the electronic device creates the cache, and processes and releases the cache for the move event according to the vertical synchronization signal periodicity, thereby ensuring that the processing process of the move event is triggered in advance, improving a response speed, and improving user interaction experience.

According to a second aspect, an embodiment of this application provides an electronic device. The electronic device includes one or more processors and one or more memories. The one or more processors are coupled to the one or more memories, the one or more memories are configured to store computer program code, the computer program code includes computer instructions, and when the computer instructions are executed by the one or more processors, the electronic device is enabled to perform the following steps: obtaining a start event of a first operation of a user; displaying a first image in response to the start event of the first operation; obtaining a first move event of the first operation; and displaying a second image in response to the first move event when first duration is less than or equal to threshold duration. The first duration is a time difference between first detection time of the first move event and a first vertical synchronization signal, and the first vertical synchronization signal is a vertical synchronization signal after the first detection time and closest to the first detection time.

The start event is an event that the first operation is detected for the first time; a move event is an event that a start event is an event that the first operation is detected for a non-first time; and an end event is an event that no first operation is detected for the first time. First detection information is located between the first vertical synchronization signal and the third vertical synchronization signal, the first vertical synchronization signal is the latter vertical synchronization signal in a first vertical synchronization signal periodicity, and the third vertical synchronization signal is the former vertical synchronization signal in the first vertical synchronization signal periodicity.

In this embodiment of this application, the electronic device determines, based on a time difference between detection time of a move event and a vertical synchronization signal immediately following the move event, whether to perform processing in advance. When the time difference is less than or equal to the threshold duration, the electronic device may be triggered in advance to perform a processing and display process in response to the move event. In this way, based on periodic display, the electronic device processes the move event as early as possible, thereby improving time validity of the move event, accelerating response and display, and improving a refresh rate, and in addition, this can improve user experience.

In a possible implementation, the electronic device further performs the following steps: obtaining a second move event of the first operation when the first duration is greater than the threshold duration; and determining, in response to the second move event, whether second duration is less than or equal to the threshold duration. The second duration is a time difference between second detection time of the second move event and a second vertical synchronization signal, the second vertical synchronization signal is a vertical synchronization signal after the second detection time and closest to the second detection time, and the second detection time is after the first detection time.

Second detection information is located between the second vertical synchronization signal and the fourth vertical synchronization signal, the second vertical synchronization signal is the latter vertical synchronization signal in a second vertical synchronization signal periodicity, and the fourth vertical synchronization signal is the former vertical synchronization signal in the second vertical synchronization signal periodicity. Acquisition time of the first move event and acquisition time of the second move event are spaced by one acquisition periodicity, the first move event is earlier, and the second move event is later.

In this embodiment of this application, if the first duration is greater than the threshold duration, the electronic device does not trigger processing and display, but waits for a move event in a next acquisition periodicity, and continues to perform the foregoing determining and processing. In this way, it can be ensured that a periodicity in which a move event is processed is still a vertical synchronization signal periodicity, and the move event can be processed in advance, to accelerate a response speed of the move event, and a display refreshing periodicity of a user can be ensured, thereby improving user interaction experience.

In a possible implementation, the electronic device further performs the following steps: detecting an input event of a user operation based on an acquisition periodicity; and when the electronic device does not detect the user operation at a first moment, determining that no input event of the user operation exists; and the obtaining a start event of a first operation of a user is specifically performing the following step: when the electronic device detects the user operation at a second moment, and when a previous acquisition result is that no user operation is detected, obtaining the start event of the first operation. The first moment and the second moment are spaced by one acquisition periodicity, and the first moment is before the second moment. In this way, the electronic device can effectively obtain the start event of the user operation according to the acquisition periodicity.

For the first moment, refer to a T0 moment in FIG. 6, and for the second moment, refer to a T2 moment in FIG. 6.

In a possible implementation, the obtaining a first move event of the first operation is specifically performing the following step: when the electronic device detects the user operation at an X^{th} moment, and when a previous acquisition result is that the user operation is detected, obtaining the first move event of the first operation. The X^{th} moment is after the second moment. In this way, the electronic device acquires the move event after the start event, thereby ensuring triggering the move event in advance, performing response and display, accelerating a processing speed of the move event, and improving user experience.

For the X^{th} moment, refer to related content of a T3 moment to a T7 moment in FIG. 6, and details are not described again.

In a possible implementation, the electronic device further performs the following steps: when the electronic device detects the user operation at a K^{th} moment, and when a previous acquisition result is that the user operation is detected, obtaining a move event of the first operation; and when the electronic device detects no user operation at a (K+1)^{th} moment, and when a previous acquisition result is that the user operation is detected, obtaining an end event of the first operation. The K^{th} moment and the (K+1)^{th} moment are after the second moment, the K^{th} moment and the (K+1)^{th} moment are spaced by one acquisition periodicity, and the (K+1)^{th} moment is after the K^{th} moment.

For the K^{th} moment, refer to the T7 moment in FIG. 6.

In a possible implementation, the electronic device further performs the following steps: when the first duration is greater than the threshold duration, waiting for detection in a next acquisition periodicity; and if the electronic device obtains a fourth move event at the K^{th} moment; and the electronic device detects no user operation at the (K+1)^{th} moment, determining that the fourth move event is a final move event, and displaying a third image. Fourth detection time of the fourth move event is before a third vertical synchronization signal, and the third vertical synchronization signal is a vertical synchronization signal after the fourth detection time and closest to the fourth detection time. In this way, the fourth move event is the final move event, and the electronic device can immediately process and display the third image.

In a possible implementation, when the end event of the first operation is obtained, the electronic device further performs the following steps: displaying a fourth image in response to the end event. In this way, the electronic device can immediately display the fourth image in response to the end event, thereby ensuring time validity of image display.

In a possible implementation, the threshold duration is the acquisition periodicity. In this way, when the threshold duration is duration of the acquisition periodicity, the electronic device can process and display all move events in advance according to the vertical synchronization signal periodicity to the maximum extent without omission, and wait for a response of the vertical synchronization signal, thereby ensuring reliability of triggering in advance.

In a possible implementation, the electronic device further performs the following step: creating a first cache, where the first cache includes description information of a third move event; and after the obtaining a first move event of the first operation, the electronic device further performs the following steps: obtaining description information of the first move event, where the description information includes detection time, coordinate information, and an event type of the first move event; and storing the description information of the first move event in the first cache. In this way, the electronic device may cache information about the move event in advance, to be triggered in advance subsequently based on the vertical synchronization signal and the threshold duration, to ensure that a response is triggered in advance while a display frequency is not increased, thereby reducing increase of processing processes, saving processing resources, and reducing energy consumption.

In a possible implementation, when the first duration is less than or equal to the threshold duration, the electronic device further performs the following steps: determining a target move event from move events in the first cache; and performing image rendering and compositing based on the target move event, to obtain a second processed image, where the second image includes the second processed image. In this way, when the electronic device caches a condition of triggering in advance, the move events stored in the cache are combined and processed, thereby ensuring reliability of processing.

In a possible implementation, the electronic device includes an input framework module, an input event receiving module, and a display. The creating a first cache is specifically performing the following steps: when the user operation is detected, if a cache is not created yet, creating the first cache by using the input event receiving module; and sending event information to the input framework module by using the input event receiving module. The obtaining description information of the first move event, and storing the description information of the first move event in a first cache is specifically performing the following steps: determining the description information of the first move event by using the input framework module based on the event information, and storing the description information of the first move event in the first cache; and sending an event storage notification to the input event receiving module by using the input framework module. The displaying a second image when first duration is less than or equal to threshold duration is specifically performing the following step: determining, by using the input event receiving module, that the first duration is less than or equal to the threshold duration, and displaying the second image by using the display. In this way, the electronic device creates the cache, and processes and releases the cache for the move event according to the vertical synchronization signal periodicity, thereby ensuring that the processing process of the move event is triggered in advance, improving a response speed, and improving user interaction experience.

According to a third aspect, an embodiment of this application provides a computer program product including instructions. When the computer program product runs on an electronic device, the electronic device is enabled to perform the display method according to any one of the first aspect or the possible implementations of the first aspect.

According to a fourth aspect, an embodiment of this application provides a computer-readable storage medium including instructions. When the instructions are run on an electronic device, the electronic device is enabled to perform the display method according to any one of the first aspect or the possible implementations of the first aspect.

According to a fifth aspect, an embodiment of this application provides a chip system. The chip system is used in an electronic device, and the chip system includes one or more processors. The one or more processors are configured to invoke computer instructions to enable the electronic device to perform the display method according to any one of the first aspect or the possible implementations of the first aspect.

### BRIEF DESCRIPTION OF DRAWINGS

FIG. 1 is a diagram of a hardware structure of an electronic device according to an embodiment of this application;
FIG. 2A and FIG. 2B are diagrams of a group of user interfaces according to an embodiment of this application;
FIG. 3A to FIG. 3E are diagrams of another group of user interfaces according to an embodiment of this application;
FIG. 4 is a diagram of a software structure of an electronic device according to an embodiment of this application;
FIG. 5 is a schematic flowchart of a user interface drawing method according to an embodiment of this application;
FIG. 6 is a schematic flowchart of another interface drawing method according to an embodiment of this application;
FIG. 7A to FIG. 7C are schematic flowcharts of an interface drawing method according to an embodiment of this application;
FIG. 8 is a schematic flowchart of an image processing method of a cached event according to an embodiment of this application;
FIG. 9A and FIG. 9B are schematic flowcharts of another interface drawing method according to an embodiment of this application; and
FIG. 10A and FIG. 10B are schematic flowcharts of still another interface drawing method according to an embodiment of this application.

### DESCRIPTION OF EMBODIMENTS

Terms used in the following embodiments of this application are only intended to describe particular embodiments, and are not intended to limit this application. As used in this specification and the claims of this application, a singular expression form, "one", "a", "said", "foregoing", "the", or "this", is intended to also include a plural expression form, unless clearly indicated to the contrary in the context. It should be further understood that the term "and/or" used in this application indicates and includes any or all possible combinations of one or more listed items.

Embodiments of this application disclose a display method and an electronic device, to increase an interface responding speed.

The electronic device in the embodiments of this application may be a device with a touchscreen, such as a mobile phone, a tablet computer, a desktop computer, a notebook computer, a handheld computer, a smart band, an ultra-mobile personal computer, a netbook, a personal phone, a personal data assistant, an augmented reality (AR)/virtual reality (VR), or the like. A specific form of the electronic device is not limited in this application.

**The following describes an apparatus in the embodiments of this application.**

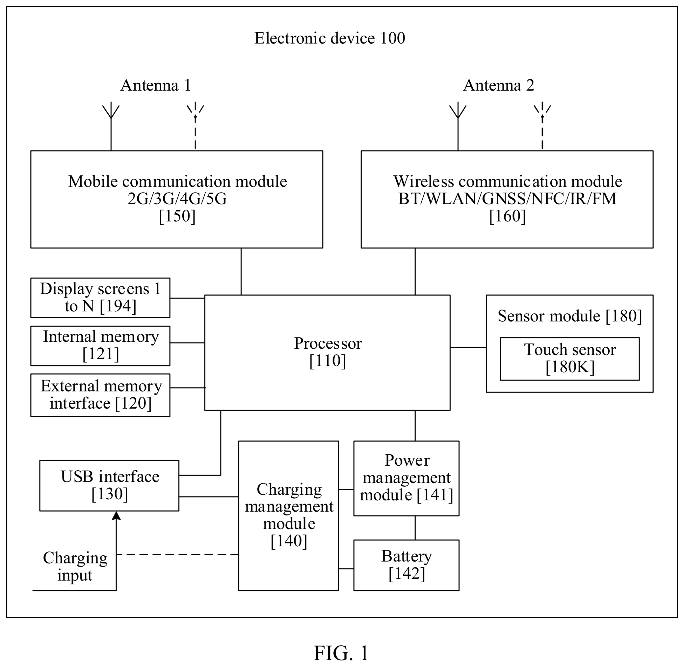

FIG. 1 is a diagram of a hardware structure of an electronic device according to an embodiment of this application.

An electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, a sensor module 180, a display screen 194, and the like. The sensor module 180 may include a touch sensor 180K and the like.

It may be understood that the schematic structure in the embodiments of this application does not constitute a specific limitation on the electronic device 100. In some other embodiments of this application, the electronic device 100 may include more or fewer components than those shown in the figure, or some components may be combined, or some components may be divided, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and a command center of the electronic device 100. The controller may generate an operation control signal according to instruction operation code and a time-sequence signal, and control fetching and execution of instructions.

A memory may further be disposed in the processor 110, configured to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access, and reduces waiting time of the processor 110, thereby improving system efficiency.

It may be understood that an interface connection relationship between the modules that is shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from the charger. The charger may be a wireless charger or a wired charger. In some embodiments of wired charging, the charging management module 140 may receive charging input of the wired charger through the USB interface 130. In some embodiments of wireless charging, the charging management module 140 may receive a wireless charging input by using a wireless charging coil of the electronic device 100. While the charging management module 140 charges the battery 142, a power management module 141 may also supply power to the electronic device.

The power management module 141 is configured to connect the battery 142, the charging management module 140, and the processor 110. The power management module 141 receives input from the battery 142 and/or the charging management module 140, and supplies power to the processor 110, the internal memory 121, an external memory, the display screen 194, the camera 193, the wireless communication module 160, and the like. The power management module 141 may further be configured to monitor parameters such as a battery capacity, a quantity of battery cycles, and a battery health status (power leakage and impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The electronic device 100 implements a display function through the GPU, the display screen 194, the application processor, and the like. The GPU is a microprocessor for image processing and connects the display screen 194 and the application processor. The GPU is configured to perform mathematical and geometric calculations, and is configured to render graphics. The processor 110 may include one or more GPUs, and the GPU executes program instructions to generate or change displayed information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diodes (quantum dot light emitting diodes, QLED), or the like. In some embodiments, the electronic device 100 may include one or N display screens 194, where N is a positive integer greater than 1.

The touch sensor 180K is also referred to as a "touch panel". The touch sensor 180K may be disposed on the display screen 194. The touch sensor 180K and the display screen 194 form a touchscreen, which is also referred to as a "touch screen". The touch sensor 180K is configured to detect a touch operation on or near the touch sensor 180K. The touch sensor may transfer the detected touch operation to the application processor to determine a type of the touch event. The touch sensor 180K may provide a visual output related to the touch operation by using the display screen 194.

In the embodiments of this application, the electronic device 100 may detect a touch operation of a user by using the touch sensor 180K. The touch operation may include a hand contact operation of the user from not touching the screen to touching the screen, and a hand lifting operation of the user from touching the screen to leaving the display screen 194. The display screen 194 may display a user interface.

By means of interaction between the user and the interface of the electronic device, the electronic device can refresh a displayed image on the screen. The display interface of the electronic device and specific content thereof are not limited in the embodiments of this application.

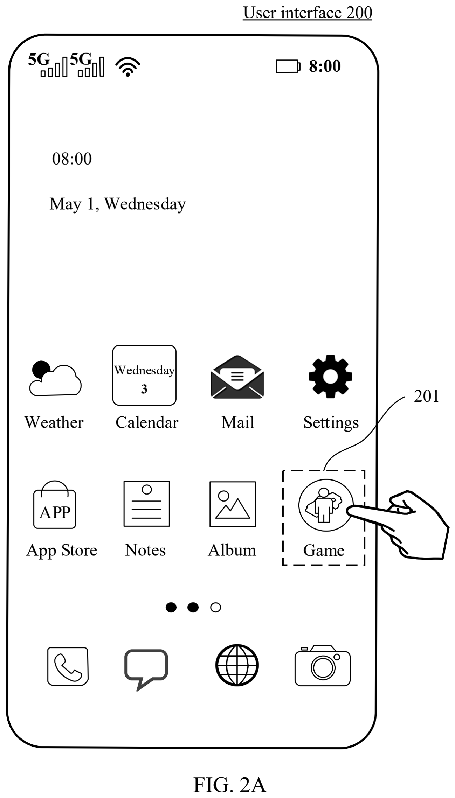

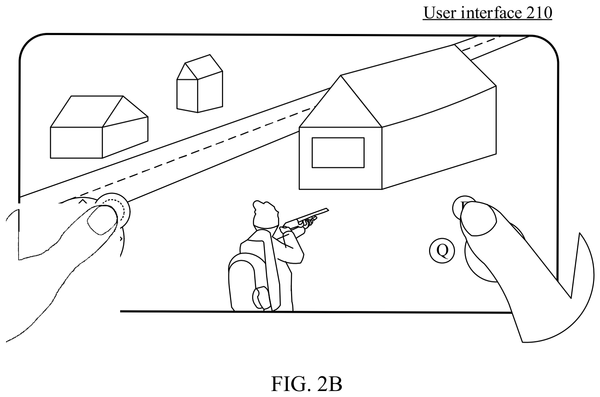

FIG. 2A and FIG. 2B are diagrams of a group of user interfaces disclosed by way of example in an embodiment of this application. FIG. 2A and FIG. 2B are diagrams of a game interface shown in an embodiment of this application.

FIG. 2A shows an example of a diagram of a user interface of an electronic device. A user powers on the electronic device, so that a display screen of the electronic device displays a home screen of the electronic device, that is, a user interface 200. As shown in FIG. 2A, the user interface 200 may include an icon of at least one application (for example, weather, calendar, mail, settings, app store, notes, album, game 201, phone, messages, browser, and camera). Positions of the icon of the application and the name of the corresponding application may be adjusted based on a preference of the user. This is not limited in this application.

It should be noted that the diagram of the interface of the electronic device shown in FIG. 2A is an example of this embodiment of this application, and the diagram of the interface of the electronic device may alternatively be another style. This is not limited in this application.

In FIG. 2A, the user may tap an application icon of the game 201 in the user interface 200. In response to an operation of tapping, by the user, the application icon of the game 201, the electronic device runs the game application, and display FIG. 2B.

As shown in FIG. 2B, the user interface 210 is a game interface. The user interface 210 may include various game controls, for example, a direction control touched by fingers on the left, and a function control touched by fingers on the right. In the foregoing process, with operations of the user, a character in the game interface moves, an action of the character changes, and the like.

For the image display process, the electronic device needs to collect a user operation in real time, and display an image for the user operation, to ensure smoothness of the game image and good user experience.

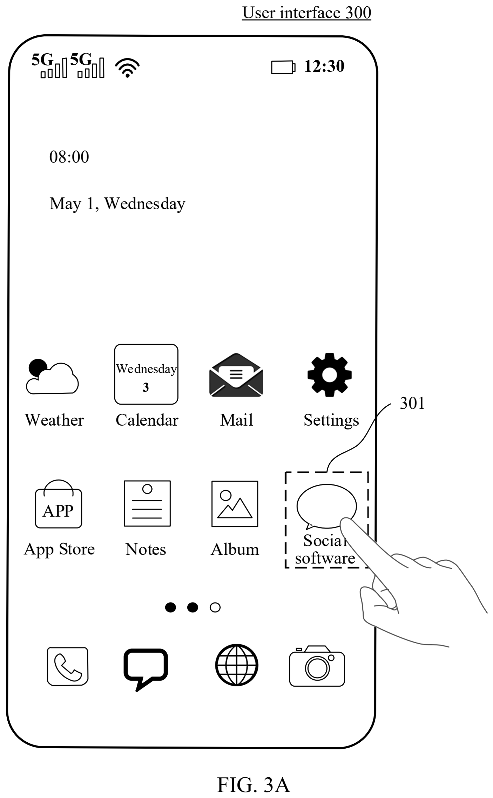

FIG. 3A to FIG. 3E are diagrams of another group of user interfaces disclosed by way of example in an embodiment of this application. FIG. 3A to FIG. 3E are diagrams of interfaces of users grabbing a red packet shown in an embodiment of this application.

FIG. 3A shows an example of a diagram of a user interface of an electronic device. A user powers on the electronic device, so that a display screen of the electronic device displays a home screen of the electronic device, that is, a user interface 300. As shown in FIG. 3A, the user interface 300 may include an icon of at least one application (for example, weather, calendar, mail, settings, app store, notes, album, social software 301, phone, messages, browser, and camera). Positions of the icon of the application and the name of the corresponding application may be adjusted based on a preference of the user. This is not limited in this application. It should be noted that for the diagram of the interface of the electronic device shown in FIG. 3A, refer to related descriptions of FIG. 2A, and details are not described again.

As shown in FIG. 3A, the user taps an application icon of the social software 301. In response to a user operation of tapping the application icon of the social software 301, the electronic device runs the social software, and displays a user interface 310.

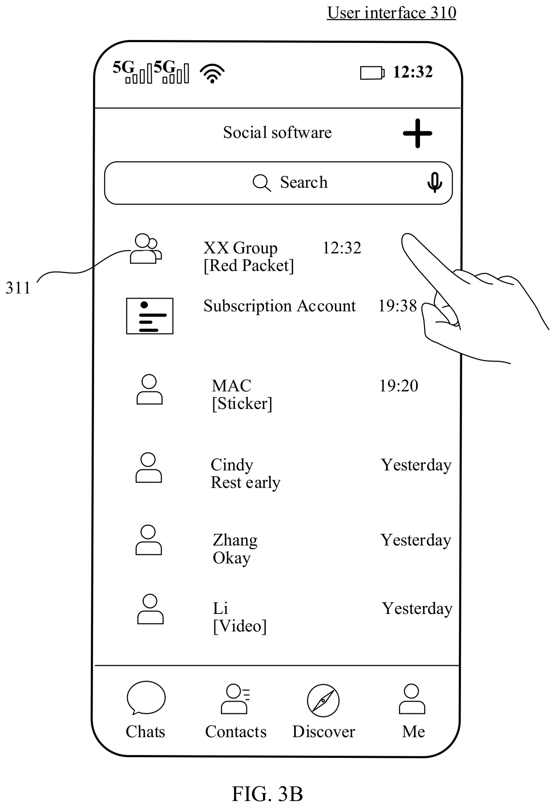

As shown in FIG. 3B, the user interface 310 may include an option list for chats. The option list includes an option of an XX group 311. The user may tap the option of the XX group 311, and in response to this user operation, the electronic device may display a dialog interface of the "XX group" (a user interface 320).

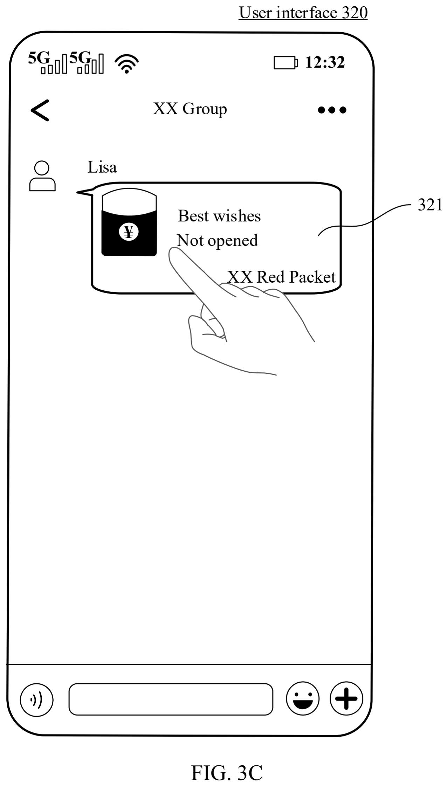

As shown in FIG. 3C, a group member Lisa sends a red packet, a red packet identifier 321 is displayed on the user interface 320, and the red packet in the red packet identifier 321 is in an unreceived state. The user may tap the red packet identifier 321 to grab the red packet, and in response to the foregoing operation, the electronic device displays a red packet interface (a user interface 330).

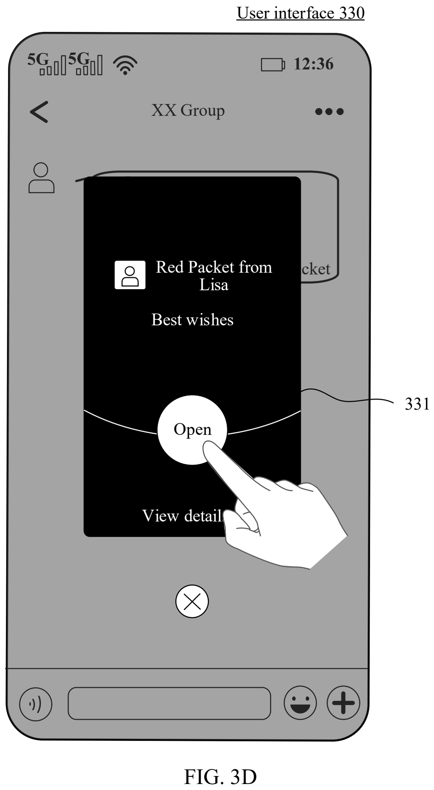

As shown in FIG. 3D, the electronic device may display a red packet cover 331, and the red packet cover 331 may include an "Open" control for opening the red packet. The user may tap the "Open" control on the red packet cover 331, and in response to the foregoing operation, the electronic device may display a red packet receiving interface (a user interface 340).

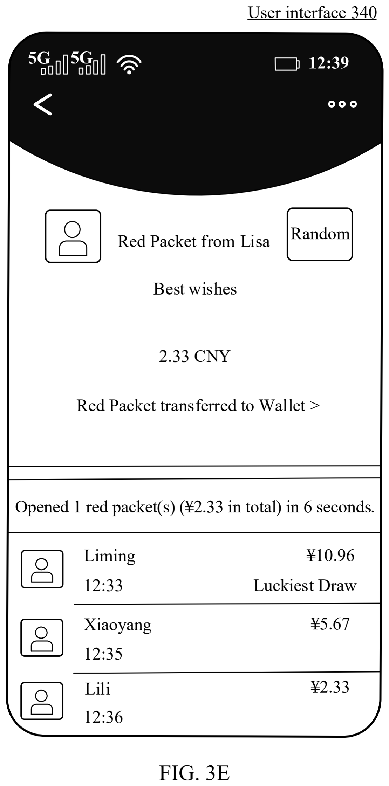

As shown in FIG. 3E, the user interface 340 may include information such as a specific amount of the red packet received by the user.

In the foregoing process of grabbing the red packet by the user, the electronic device may receive the operation of the user, and display a red packet reception result. A process from sending to grabbing the red packet is usually within a short period. If a quantity of red packets is limited, and a quantity of people grabbing the red packet is large, the electronic device needs to respond to an operation of grabbing the red packet by the user in time, to improve a probability that the user grabs the red packet.

In the foregoing two implementations, if the electronic device cannot quickly respond to the operation of the user of touching a directional control or a function control, the user may perceive that the game interface does not follow control of the hands smoothly. If the electronic device cannot quickly respond to the operation of the user of grabbing the red packet, the user may not easily grab the red packet. It can be seen that a speed at which the electronic device responds to the user operation directly affects user interaction experience. A specific operation manner of the user is not limited in this embodiment of this application, which may be the foregoing touch operation such as a tapping operation or a sliding operation, or may be an air gesture operation.

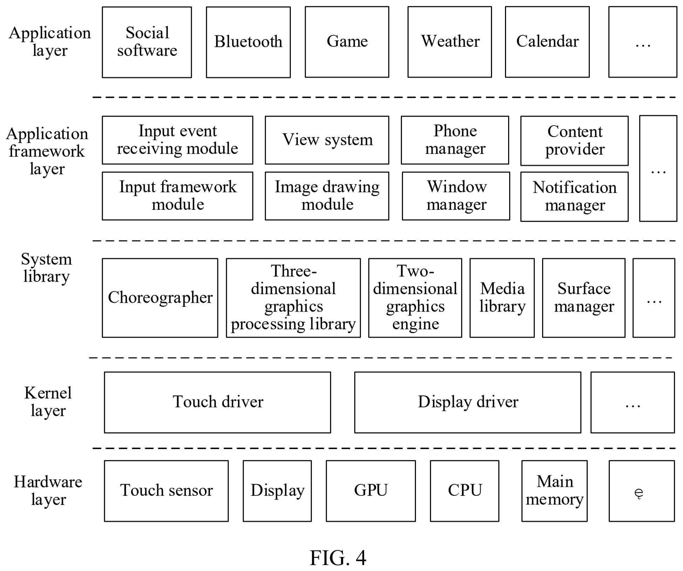

FIG. 4 is a diagram of a software structure of an electronic device according to an embodiment of this application.

As shown in FIG. 4, a software framework of the electronic device in this application may include an application layer, an application framework layer (framework, FWK), a system library, a kernel layer (kernel), and a hardware layer.

The application layer may include a series of application packages, for example, application programs such as social software, bluetooth, game, weather, and calendar (which may also be referred to as applications; and some of the foregoing applications are not shown). In the embodiments of this application, a first application may be any application at the application layer, and the user may open or close the first application, or may perform an operation in the first application.

The application framework layer provides an application programming interface (application programming interface, API) and a programming framework for applications at the application layer. The application framework layer includes some predefined functions.

As shown in FIG. 4, the application framework layer may include **an input event receiving module, an input framework module, a view system, an image drawing module,** a phone manager, a window manager, a content provider, a notification manager, and the like.

The input event receiving module can manage caches. For example, the input event receiving module can obtain an operation event from a touch sensor (by using a touch driver). The electronic device may create a cache based on an event and send operation event information to the input framework module.

The input framework module may receive the operation event information from the input event receiving module. The input framework module can determine a description parameter of the operation event. After receiving the operation event information, the input framework module may notify the application by using the view system, to request to respond to the operation event and perform processing and display.

The view system may include a visual control such as a control for text display or a control for picture display. The view system may be configured to construct an application. A display interface may include one or more views. For example, a display interface including a short message notification icon may include a view for displaying a text and a view for displaying a picture. The view system may be configured for information transmission between the input framework module and the application, and information transmission between the application and a choreographer.

The image drawing module may draw an image, and may specifically invoke modules such as a three-dimensional graphics processing library and a two-dimensional image engine in the system library, to perform drawing processing, to obtain a drawn image. The drawn image may be used for rendering and compositing processing.

The phone manager is configured to provide a communication function of the electronic device 100, for example, call state management (including getting through, hang-up, and the like).

The window manager is configured to manage a window application. The window manager may obtain a size of a display screen, determine whether there is a status bar, perform screen locking, take a screenshot of the screen, and the like.

The content provider is configured to store and obtain data and make the data accessible to an application. The data may include a video, an image, an audio, calls that are made and answered, a browsing history and a bookmark, a phone book, and the like.

The notification manager enables an application to display notification information in the status bar. The notification information may be used to convey a message of a notification type, where the message may disappear automatically after a short stay without user interaction. For example, the notification manager is configured to provide a notification of download completion, a message notification, and the like. The notification manager may alternatively be a notification that appears on a top status bar of the system in the form of a graph or a scroll bar text, for example, a notification of an application running on the background, or may be a notification that appears on the screen in the form of a dialog window. For example, text information is prompted on a status bar, a prompt tone is made, the electronic device vibrates, or an indicator light flashes.

Android Runtime includes a core library and a virtual machine. The Android runtime is responsible for scheduling and managing an Android system.

The core library includes two parts: One part is a performance function that the Java language needs to invoke, and the other part is a core library of Android.

The application layer and the application framework layer run in the virtual machine. The virtual machine executes Java files of the application layer and the application framework layer as binary files. The virtual machine is configured to execute functions such as object lifecycle management, stack management, thread management, security and exception management, and garbage collection.

The system library may include a plurality of function modules, such as a surface manager (surface manager), a media library (media libraries), a three-dimensional graphics processing library (for example, OpenGL ES), a 2D graphics engine (for example, SGL), and a choreographer.

The surface manager is configured to: manage a display subsystem, and provide fusion of 2D and 3D layers to a plurality of applications.

The media library supports playback and recording in a plurality of common audio and video formats, and also support static image files, and the like. The media library may support a plurality of audio and video encoding formats such as MPEG4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawings.

The choreographer (choreographer) may receive an animation drawing instruction from the view system, and invoke modules such as the surface manager, the three-dimensional graphics processing library, and the 2D graphics engine to perform animation drawing, to obtain a drawn image.

The choreographer and a rendering and compositing process thereof: The choreographer can coordinate and manage an animation on an interface and an occasion of a rendering operation, and may be responsible for rendering, compositing, and display of the interface. Specifically, the choreographer may be configured to: request a vertical synchronization signal (vsync), and start performing a rendering and compositing operation in response to the vertical synchronization signal obtained through requesting. The vertical synchronization signal is a signal provided by the operating system and used to coordinate and synchronize an operation by the choreographer and an operation by a surfaceFlinger (surface flinger). Generation of the choreographer and a trigger condition for performing a drawing operation: After each application is started by the user, a visual interface or view needs to be displayed for this application, and at least one choreographer belonging to the application is generated. A quantity of choreographers may be a quantity of choreographers of a thread used by the application.

When the application needs to refresh an interface or a view, the choreographer requests a vertical synchronization signal from the SurfaceFlinger, to seek a suitable occasion for performing a drawing operation. After receiving the vertical synchronization signal sent by the SurfaceFlinger, the choreographer starts to perform the drawing operation. The SurfaceFlinger is a service provided by a bottom layer of the operating system, and is used to receive requests of choreographers of different applications, and distribute vertical synchronization signals to the applications in response to the requests. The vertical synchronization signal may be generated through simulation by software, or may be generated by hardware of the electronic device. This is not specifically limited.

A frequency of the vertical synchronization signal of the electronic device is associated with a screen refresh rate of the electronic device. For example, the vertical synchronization signal and the screen refresh rate are both 90 Hz. The frequency of the vertical synchronization signal is not limited in this embodiment of this application.

The kernel layer is a foundation of the Android operating system, and a final function of the Android operating system is implemented by using the kernel layer. The kernel layer includes at least a display driver, and the like. The display driver may obtain, from a buffer (buffer), image frames whose drawing are completed, and control the display to sequentially display the image frames. The touch driver may obtain an operation event of a touch sensor, and upload related information of the operation event to the input event receiving module.

The hardware layer may include a touch sensor, a display, a graphics processing unit (graphics processing unit, GPU), a CPU, and the like. The touch sensor can detect a start (a start event) and an end (an end event) of a touch operation of the user, and a start position and an end position of the touch operation. The display may display a image frame whose animation processing is completed. The graphics processing unit may perform a process of image rendering and compositing. The central processing unit (CPU) may draw an image.

It should be noted that, the diagram of the software structure of the electronic device shown in FIG. 4 provided in this application is only an example, and does not limit specific module division in different layers of the Android operating system. For details, refer to the descriptions of the software structure of the Android operating system in conventional technologies. In addition, the display method provided in this application may alternatively be implemented based on another operating system, and examples are not provided in this application one by one.

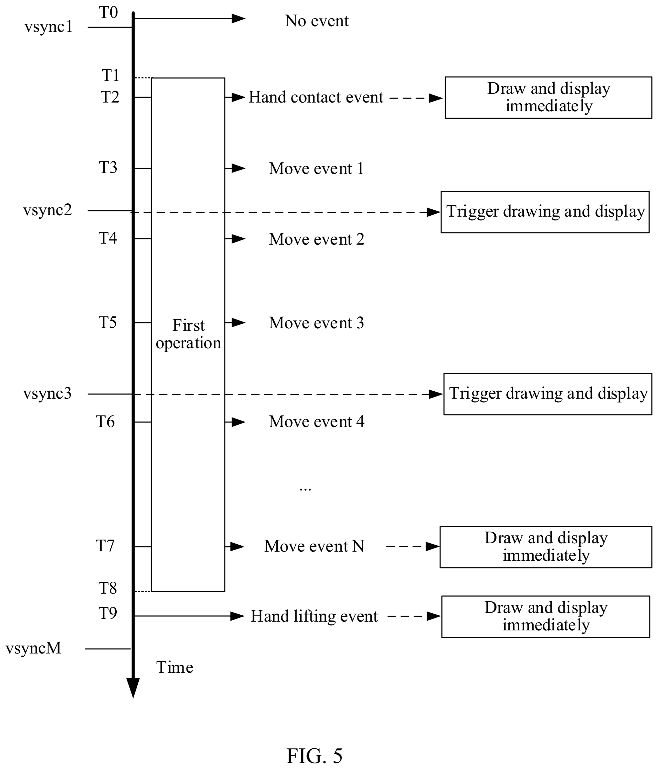

FIG. 5 is a schematic flowchart of an interface drawing method according to an embodiment of this application. As shown in FIG. 5, an operation detection process and an interface refreshing process of an electronic device for one operation of a user are specifically described below according to steps:

The electronic device detects an input event of a user operation according to an acquisition periodicity. For example, detection time may respectively correspond to T0, T2, T3, T4, T5, T6, ..., T7, T9, and the like (where two adjacent detection time are spaced by one acquisition periodicity). The electronic device may refresh a display interface according to a refreshing periodicity, and refreshing time may respectively correspond to vsync1, vsync2, vsync3, ..., vsyncM, and the like (where adjacent refresh time are spaced by one refreshing periodicity). A first operation of the user starts at a moment T1 and ends at a moment T8. The first operation may be a tap operation, a slide operation, or another type of operation. This is not limited in this application.

In the embodiments of this application, the input event of the user operation includes a start event, a move event, and an end event.

### 1. Acquire a start event of a first operation, and perform processing and display immediately:

The electronic device may detect an output event of a user operation according to the acquisition periodicity. Before the first operation, the user does not start an operation on the electronic device, and at the T0 moment, the electronic device does not detect an input event of the user operation, that is, detects no event. At the moment T1, the user starts to touch a screen of the electronic device. At the moment T2 that is one acquisition periodicity later than the moment T0, the electronic device acquires a start event of a first operation. The start event may be understood as an event from detecting no user operation to detecting a user operation. The moment T0 and the moment T2 are spaced by one acquisition periodicity. At the moment T1, the user starts to touch the screen of the electronic device, and start time of the first operation may fall within the acquisition periodicity from T0 to T2. When the electronic device detects the start event, the electronic device immediately triggers a processing and display process for the start event, that is, immediately responds to the start event to perform processing of drawing, rendering, and display.

### 2. Acquire a move event (a non-final move event) of the first operation, and perform processing and display according to a refreshing periodicity:

Before the first operation ends, the electronic device can obtain a move event of the first operation by periodically acquiring the input event of the user operation. The move event is a user operation event acquired in a process of detecting the first operation. As shown in FIG. 5, at the moment T3, the moment T4, the moment T5, the moment T6, ..., and the moment T7, the electronic device periodically acquires a move event 1, a move event 2, a move event 3, a move event 4, ..., and a move event N respectively.

In the embodiments of this application, the move events may be classified into a final move event and a non-final move event. The final move event is an input event when the first operation is detected for the last time, the final move event is followed by and neighboring to an end event, and the non-final move event is followed by and neighboring to a move event. The moment T3, the moment T4, the moment T5, the moment T6, ..., and a moment T(N-1) are all non-final move events, and a moment TN is the final move event.

Because the electronic device acquires operation events at a high frequency, and refreshes display at a low frequency, move events (except a move event acquired at the last time, namely, a move event N in FIG. 5) acquired for a plurality of consecutive times for one operation may be processed according to a vsync signal (vertical synchronization signal) refreshing periodicity of an application.

For the move event 1 after the start event, the electronic device waits until an application display refreshing periodicity vsync2 arrives, and then performs processing. For the move event 2 and the move event 3, when a display refreshing periodicity vsync3 arrives, the electronic device performs processing.

### 3. Acquire the final move event of the first operation, and perform processing and display immediately:

When the electronic device obtains the move event N, if determining that an input event following the move event N in one acquisition periodicity is an end event, the electronic device may determine the move event N as the final move event, and immediately perform drawing and display processing without waiting for a display refreshing periodicity. The final move event is the last move event of the first operation, and the end event is acquired after the final move event.

### 4. Acquire the end event of the first operation, and immediately perform processing and display:

The user ends the operation at the moment T8, and the electronic device periodically acquires operation events. At the moment T9, the electronic device cannot detect an operation of the user, and may determine that a hand-lifting event is obtained. The electronic device may immediately trigger a drawing process for the hand-lifting event, and in this process, the electronic device does not need to wait for a vsyncM signal to trigger image processing and display.

In the foregoing process, except the final move event, drawing of all non-final move events needs to be triggered by periodic vsync signals. However, if there is long time from a move event to a next vsync, waiting time is excessively long, a responding and processing speed of the electronic device is excessively low, and interaction experience during the user operation is poor.

In the implementation of FIG. 5, a frequency of acquiring user operations by the sensor is high, a frequency of refreshing display by the electronic device is low, and a frequency of acquiring input events is high, so that the electronic device can acquire the move events, cache related information of the move events, and process a plurality of cached move events according to a signal periodicity of vertical synchronization signals of an application. Therefore, each time the electronic device performs processing, the electronic device usually selects only one move event for processing and display refreshing. In the foregoing process, processing of the move event usually needs to wait for the vertical synchronization signal of the application to be triggered. In a process of waiting for the vertical synchronization signal of the application, a response of processing of the move event is slow, and processing and interface refreshing are slow, causing poor user experience.

To resolve the foregoing problems, the embodiments of this application provide a display method and an electronic device. The electronic device determines whether a time difference between the move event and a next vertical synchronization signal of the application is less than or equal to threshold duration. When the time difference is less than or equal to the threshold duration, the electronic device may trigger a process of rendering, compositing, and display in advance.

FIG. 6 is a schematic flowchart of another interface drawing method disclosed in an embodiment of this application. According to the foregoing implementation, as shown in FIG. 6, an operation detection process and an interface refreshing process of an electronic device for one operation of a user are specifically described below according to the steps:
**1. Acquire a start event of a first operation, and perform processing and display immediately.**
**2. Acquire a move event (a non-final move event) of the first operation, and determine, based on event time and a refreshing periodicity, an occasion of processing and display: when a time difference between the event time and the refreshing periodicity is less than or equal to threshold duration, immediately trigger processing and display; otherwise, wait for the refreshing periodicity to perform processing and display.**
**3. Acquire the final move event of the first operation, and perform processing and display immediately.**
**4. Acquire an end event of the first operation, and immediately perform processing and display.**

For steps 1, 3, and 4 in FIG. 6, refer to the related descriptions in FIG. 5.

In step 2, the determining whether to perform processing in advance for a move event includes: When receiving a move event 1 at a moment T3, the electronic device determines that a time difference between T3 and vsync2 is less than or equal to the threshold duration, and therefore determines to immediately trigger processing and display (immediately process an event currently in a cache at a time). Therefore, in comparison with the method shown in FIG. 5, the electronic device can trigger processing of the move event in advance. When receiving a move event 2 is at a moment T4, the electronic device determines that a time difference between T4 and vsync3 is greater than the threshold duration, and therefore, determines not to trigger processing and display. When receiving a move event 3 at a moment T5, the electronic device determines that a time difference between T5 and vsync3 is less than or equal to the threshold duration, and therefore, determines to immediately trigger processing and display (immediately process an event currently in a cache at a time). Therefore, in comparison with the method shown in FIG. 5, the electronic device can trigger processing of the move event in advance for duration from vsync3 to T5. For processing methods of other events above, refer to related descriptions in FIG. 5. Details are not described again.

In the foregoing implementation, when obtaining a move event, if duration between detection time of the move event and a next vsync is less than or equal to the threshold duration, the electronic device may trigger a processing and displaying process in advance; otherwise, the electronic device needs to wait for a move event in a next acquisition periodicity, and trigger the processing and display process according to time of the next vsync. As shown in FIG. 6, at the moment T3, the electronic device triggers processing and display of the move event 1 in advance; and when vsync2 arrives, the move event 1 has been processed, and is no longer processed and displayed. At the moment T5, the electronic device triggers processing and display of the move event 2 and the move event 3 in advance. When vsync3 arrives, the move event 2 and the move event 3 have been processed, and are no longer processed and displayed. In the foregoing process, a move event can be processed and displayed in advance based on determining. Based on periodic refreshing and display, response is made in advance to the maximum extent, and response processing is accelerated while a refresh rate is ensured, a processing delay is reduced, frame freezing is relieved, and user interaction experience is improved. For the game operation interface in FIG. 2A and FIG. 2B, the foregoing processing can improve a process used by a user, accelerate responding, and improve user interaction experience. For the processing interface of grabbing the red packet in FIG. 3A to FIG. 3E, in the user operation of tapping "Open the red packet", because an acquisition periodicity is extremely short, the electronic device can also obtain start time, a move event, and an end event of the operation. In the process of grabbing the red packet, the sooner the red packet event is responded to, the higher a probability of grabbing the red packet. In the foregoing process, processing of the move event is triggered in advance. If a response result of a move event is that the red packet is grabbed, responding in advance can increase a probability of grabbing the red packet, to improve user experience of grabbing the red packet.

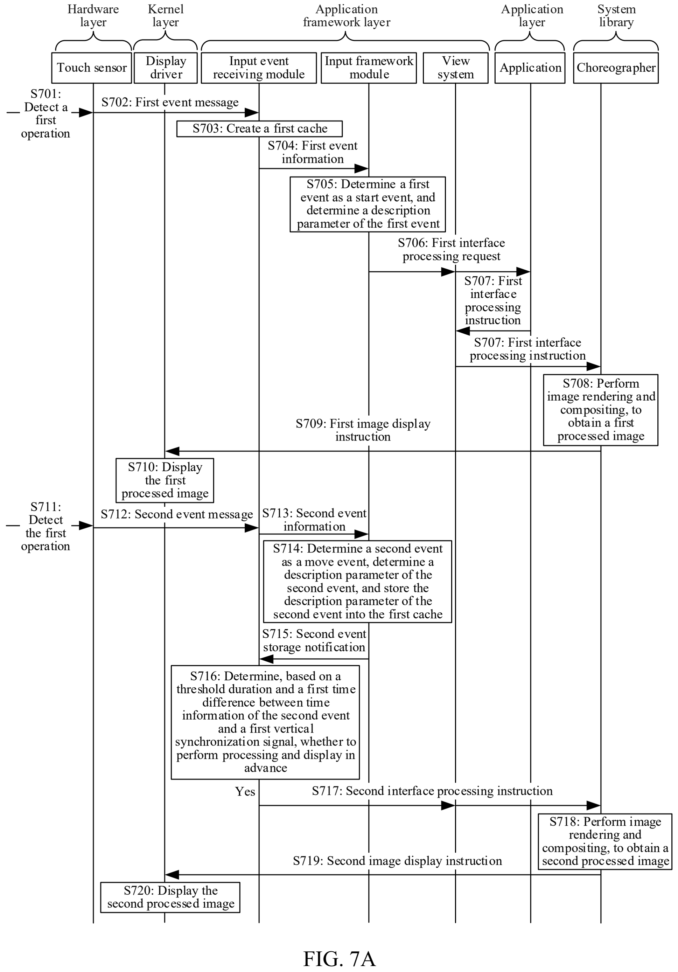

With reference to the method in FIG. 6, FIG. 7A to FIG. 7C are schematic flowcharts of another interface drawing method disclosed in an embodiment of this application. As shown in FIG. 7A to FIG. 7C, the interface drawing method may include but is not limited to the following steps:
FIG. 7A shows: A user starts a first operation, and an electronic device periodically acquires a user operation, detects the first operation for the first time, and obtains a first event; and detects the first operation for the second time, and obtains a second event. For processing processes of the first event and the second event:
S701 to S710 are the processing process performed by the electronic device after detecting the first operation for the first time (detect a start event, and perform processing and display immediately):
S701: A touch sensor detects the first operation.

In FIG. 6, at the moment T1, the user touches the display, and at the moment T2, the electronic device can detect the first operation by using the touch sensor. It should be noted that the electronic device does not detect the first operation at the moment T0 that is in an acquisition periodicity previous to the moment T2.

For the first operation of the user, refer to the user operation in FIG. 2B and the user operation in FIG. 3D. The first operation may be a touch operation, for example, a slide operation or a tap operation. Alternatively, the first operation may be an air gesture operation or the like, which is not limited in this application.

In addition, the touch sensor may detect a user operation according to a particular acquisition periodicity.

S702: The touch sensor sends a first event message to an input event receiving module.

When detecting the first operation, the touch sensor may send the first event message to the input event receiving module. Correspondingly, the input event receiving module may receive the first event message from the touch sensor. The first event message may include an operation identifier. The operation identifier may indicate that an operation is detected or the operation is not detected. For example, if a user operation is detected, the operation identifier is "1"; if the user operation is not detected, the operation identifier is "0". The operation identifier in the first event message may be used for indicating that the operation is detected.

In this case, the first event may be a start event (for example, a touch_down event) of the first operation.

S703: The input event receiving module creates a first cache.

When obtaining the first event message, the input event receiving module can determine that the first operation is detected, and when a batch (batch) is not created, start to create the first cache. For example, the input event receiving module may apply for a polling buffer, and determine a storage address, namely, a first storage address, of a main memory corresponding to the first cache. The cache may be configured to record information about a move event.

In the embodiments of this application, a display memory may include a batch and a buffer, both of which can be used to cache data. The batch may be configured to cache related information of a move event; and the buffer may be configured to cache an image obtained by compositing rendering data for display.

If it is determined that a user operation is detected in the first event message received by the input event receiving module, the input event receiving module can determine whether to create the cache. When a cache is already created, the input event receiving module does not create the cache; when the cache is not created yet, the input event receiving module performs processing of creating the cache. Currently, a cache is not created yet, and the input event receiving module can determine that the cache needs to be created.

With reference to the method shown in FIG. 6, in the embodiments of this application, not all move events need to be processed. Therefore, creating the buffer is for storing related information of the move event. The vsync signal of the electronic device is periodically triggered, to process and display the move event in the buffer at a time.

Optionally, the input event message may include a device identifier, and the input event receiving module may determine, based on the device identifier in the first event message, which device the first operation is from. For example, the first event may be obtained by the touch sensor, and it may be determined that the first event is an event of a user touching the display.

S704: The input event receiving module sends first event information to an input framework module.

After obtaining the first event message, the input event receiving module may send the first event information to the input framework module. The first event information may include time information and coordinate information of the first event.

S705: The input framework module determines the first event as a start event, and determine a description parameter of the first event.

A description parameter of an event may include one or more of an event type, time information, and coordinate information. The time information is time at which the electronic device acquires the first event, and the coordinate information is a touch position when the first event is acquired. In this embodiment of this application, event types of an input event may include the following three types: a start event, a move event, and an end event. The input framework module determines that no operation event is obtained in an acquisition periodicity previous to the first event (as shown in FIG. 6, there is no event at the moment T0), and determines that the first event is the start event of the first operation.

S706: The input framework module sends a first interface processing request to an application by using a view system.

The input framework module may send the first interface processing request to the application by using the view system. Correspondingly, the application may receive, by using the view system, the first interface processing request from the input framework module. The first interface processing request may be used for requesting to respond to the start event (the first event) and immediately perform display and refreshing. Optionally, the first interface processing request may include an identifier of the first event.

Optionally, the first interface processing request may include the event type. The event type includes: a start event, an end event, and a move event. Move events may further be classified into final move events and non-final move events. In this embodiment of this application, the start event and the end event do not need to be cached and are directly processed and displayed by the electronic device. For the move event, if the move event is not a final move event, move events in a cache need to wait for a vsync signal for combined processing and display; if the move event is the final move event, the move event in the cache is immediately triggered for combined processing and display. In S706, because the first event is a start event, the first interface processing request may include a start event type.

Optionally, the first interface processing request may include a processing type. The processing type may include three input event processing manners: processing immediately, processing a cache based on a vsync signal, and processing the cache immediately. When the current event is a start event or an end event, it is determined that the processing type is processing immediately; when the current event is a non-final move event, it is determined that the processing type is processing the cache based on a vsync signal; and when the current event is a final move event, it is determined that the processing type as processing the cache immediately. In this case, when the first event is the start event, the input framework module may determine that the first interface processing request includes the processing type of processing immediately.

S707: The application sends a first interface processing instruction to a choreographer by using the view system.

When the application can determine, based on the first interface processing request, to immediately process the first event, the application may send the first interface processing instruction to the choreographer by using the view system. Correspondingly, the choreographer may receive the first interface processing instruction from the application by using the view system. The first interface processing instruction may be used for instructing the electronic device to perform interface processing and display for the first event. In other words, an interface processing instruction can be used for instructing the choreographer to immediately perform rendering, compositing, and display.

The application can periodically obtain a vsync signal. The vsync signal is used for triggering display refreshing of a first application. In other words, it may be understood that a signal periodicity of the vsync signal is a refreshing periodicity of a display interface of the first application.

After receiving the first interface processing request, the application may determine a sending occasion of the first interface processing instruction. If the first interface processing request includes the event type of the first event, the sending occasion is determined based on the event type. If the first interface processing request includes the processing type of the first event, the sending occasion is determined based on the processing type. The sending occasion may include: immediately sending and vsync signal sending.

Optionally, when the first interface processing request may include the event type, the application determines sending occasions of interface processing instructions for different event types. When the event type is the start event, the end event, or the final move event, the application may immediately send the interface processing instruction to the choreographer. When the event type is the non-final move event, the application may wait for a vsync signal, and when the vsync signal arrives, the application sends the interface processing instruction to the choreographer. When the event type is the move event, the interface processing instruction may include cache processing information, the cache processing information may be used for requesting to process a move event in a first cache, and the cache processing information may include the first storage address.

Optionally, when the first interface processing request may include the processing type, the application determines sending occasions of interface processing instructions for different processing types. When the processing type is processing immediately, the interface processing instruction may be immediately sent to the choreographer. When the processing type is processing the cache based on a vsync signal, the application may wait for the vsync signal, and when the vsync signal arrives, the interface processing instruction is sent to the choreographer. When the event type is processing the cache immediately, the interface processing instruction may be immediately sent to the choreographer without waiting for an app_vsync signal. When the processing type is processing the cache, the interface processing instruction may include current cache processing information, the cache processing information is used for requesting to process a cached event in the first cache, and the cache processing information may include the first storage address.

In the foregoing two implementations, because the first event is the start event, for the first interface processing request, the application may immediately send the first interface processing instruction to the choreographer by using the view system.

In the foregoing process, for different interface processing requests, the electronic device needs to send interface processing instructions according to different occasions. Different content of the interface processing instructions means different processing and display manners of the choreographer. The second event, the third event, the fourth event, and the like are specifically described below.

S708: The choreographer performs image rendering and compositing, to obtain a first processed image.

After receiving the first interface processing instruction, the choreographer may start to perform image rendering and compositing, mainly for a display interface of a current application. In a rendering and compositing process, the choreographer may invoke modules such as a three-dimensional graphics processing library, a two-dimensional graphics engine, and a media library to perform image rendering and compositing processing, to obtain the first processed image. Then, the first processed image may be cached in a display cache.

The first processed image may include Y frames of images, where Y is a positive integer.

Optionally, when receiving the interface processing request, the application determines to immediately perform an interface processing and display process.

S709: The choreographer sends a first image display instruction to a display driver.

After obtaining the first processed image, the choreographer may send the first image display instruction to the display driver. Correspondingly, the display driver may receive the first image display instruction from the choreographer. The first image display instruction is used for instructing the display driver to display the first processed image.

S710: The display display driver displays the first processed image.

After obtaining the first image display instruction, the display driver may display the first processed image in the display cache on a display screen.

S711 to S720 are the processing process performed by the electronic device when detecting the move event of the first operation:

S711: The touch sensor detects the first operation.

The touch sensor of the electronic device periodically performs acquisition processing, and detecting the touch operation for the second time may represent that the operation is not ended yet.

For specific descriptions of S711, refer to the descriptions of S701. Details are not described again.

S712: The touch sensor sends a second event message to the input event receiving module.

When detecting the first operation, the touch sensor may send the second event message to the input event receiving module. Correspondingly, the input event receiving module may receive the second event message from the touch sensor. For descriptions of S712, refer to the related descriptions of S702. Details are not described again.

The second event message may include an operation identifier, and the operation identifier may indicate that a user operation is detected. For details, refer to S702.

After receiving the second event message from the touch sensor, the input event receiving module may determine that a cache is already created, and determine not to create a cache. For the determining process, refer to the related descriptions of S703. Details are not described again.

S713: The input event receiving module sends second event information to the input framework module.

When receiving the second event, the input event receiving module may send the second event information to the input framework module. Correspondingly, the input framework module may receive the second event information from the input event receiving module. The second event information includes the storage address of the first cache. The second event information further includes time information, coordinate information, and the like of the second event.

S714: The input framework module determines the second event as a move event, determines a description parameter of the second event, and stores the description parameter of the second event into the first cache.

When receiving the second event, the input framework module may determine, based on a previous event type (the start event), that the event type of the second event is the move event. Then, the electronic device may determine the description parameter of the second event. For specific content of the description parameter, refer to the related descriptions of S705. Details are not described again.

After determining the description parameter of the second event, the input framework module may store the description parameter of the second event based on the storage address of the first cache.

S715: The input framework module sends a second event storage notification to the input event receiving module.

After storing the description parameter of the second event in the first cache, the input framework module may send the second event storage notification to the input event receiving module. Correspondingly, the input event receiving module may receive the second event storage notification from the input framework module. The second event storage notification may be used for notifying that storage of the second event is completed.

S716: The input event receiving module determines, based on threshold duration and a first time difference between time information of the second event and a first vertical synchronization signal, whether to perform processing and display in advance.

When the input event receiving module determines to perform processing and display in advance, S717 is performed; when the input event receiving module determines not to perform processing in advance, the output event receiving module may send an interface processing instruction to the application by using the view system, and the application triggers processing and display according to a refreshing periodicity.

After performing S715, the input event receiving module may perform operations based on whether the first time difference between acquisition time of the second event and the periodic signal is less than or equal to the threshold duration. When the first time difference is less than or equal to the threshold duration, processing may be performed in advance, and S717 is performed; when the first time difference is greater than the threshold duration, the input event receiving module may determine to send the interface processing instruction to the application, and the application determines, based on the periodic vsync signal, whether to trigger a response.

The threshold duration may be equal to the acquisition periodicity of acquiring a user operation.

S717: The input event receiving module sends a second interface processing instruction to the choreographer by using the view system.

In S716, when the input event receiving module determines that the processing and display needs to be performed in advance, S717 may be performed. The input event receiving module may send the second interface processing instruction to the choreographer by using the view system. Correspondingly, the choreographer may receive the second interface processing instruction from the input event receiving module by using the view system. In this case, processes such as S706 and S707 do not need to be performed, and application processing does not need to be performed in the triggering process, thereby ensuring reliability and efficiency of method execution.

S718: The choreographer performs image rendering and compositing, to obtain a second processed image.

After obtaining the second interface processing instruction, the choreographer may immediately perform image rendering and compositing, to obtain the second processed image. For S718, refer to the related descriptions of S708.

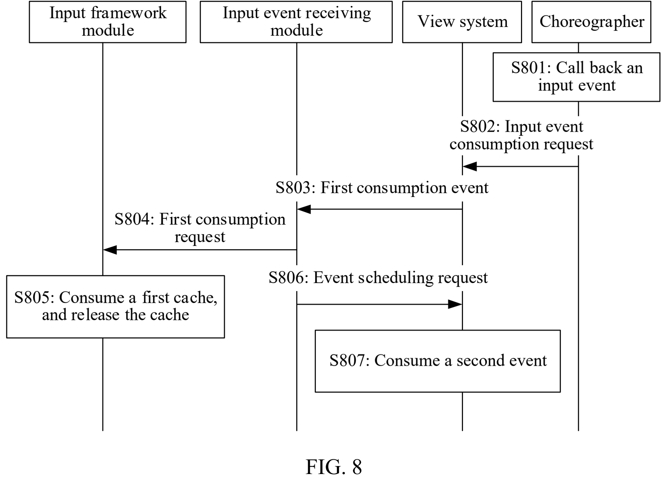

To specifically describe the processing and display process of the second event by the choreographer, FIG. 8 is a schematic flowchart of an image processing method of a cached event according to an embodiment of this application. As shown in FIG. 8, the image processing method of a cached event may include but is not limited to the following steps:

After receiving the interface processing instruction, the choreographer may start to perform the processing process of S801 to S807:
S801: The choreographer calls back an input event.
The choreographer may execute a callback input event, that is, acquire currently received event information, an input event sequence may be stored in a main memory of the electronic device, and the choreographer may read the input event sequence, for example, the second event.

Assuming that the second interface processing instruction includes an identifier of the second event, the choreographer may read the second event in the input event sequence based on the event identifier.

S802: The choreographer sends an input event consumption request to the view system.

The choreographer may send the input event consumption request to the view system. Correspondingly, the view system may receive the input event consumption request from the choreographer. The input event consumption request is used for requesting the view system to process an input event.

S803: The view system sends a first consumption event to the input event receiving module.

The view system may send the first consumption event to the input event receiving module. Correspondingly, the input event receiving module may receive the first consumption event from the view system.

S804: The input event receiving module sends a first consumption request to the input framework module.

After receiving the first consumption event, the input event receiving module may send the first consumption request to the input framework module. Correspondingly, the input framework module may receive the first consumption request from the input event receiving module. The first consumption request may include the storage address of the first cache.

S805: The input framework module consumes the first cache, and releases the cache.

After receiving the first consumption request, the input framework module may consume the first cache and release the first cache.

S806: The input event receiving module sends an event scheduling request to the view system.

The input event receiving module may send the event scheduling request to the view system. Correspondingly, the view system may receive the event scheduling request from the input event receiving module.

S807: The view system consumes the second event.

After receiving the event scheduling request, the view system may perform drawing preprocessing in response to the second event, for example, display a canvas for layout and measurement, and determine information such as a window sliding distance. A specific processing process of consuming the second event is not limited.

In the foregoing process, when an encoder completes S718, the first cache is determined to be released.

S719: The choreographer sends a second image display instruction to the display driver.

S720: The display driver displays the second processed image.

For descriptions of S719 and S720, refer to the related descriptions of S709 and S710. Details are not described again.

For the first event in FIG. 7A, refer to the start event in FIG. 6, and for the second event, refer to the move event 1 in FIG. 6. Details are not described again.

By using the determining process of S716, the electronic device can determine whether the first vertical synchronization signal is very close. When time of the first vertical synchronization signal is close, the electronic device may trigger the processing and displaying process in advance, to accelerate rendering, compositing, and displaying processes in response to the move event, and improve a responding speed of touching by the user. In the foregoing process, on a basis of refreshing periodically, the electronic device determines whether refreshing is performed in this acquisition periodicity. When it is determined that refreshing is performed in this acquisition periodicity, the electronic device processes the cached move event immediately without waiting, so that a display response is processed in advance, the responding speed is accelerated, and user interaction experience is improved.

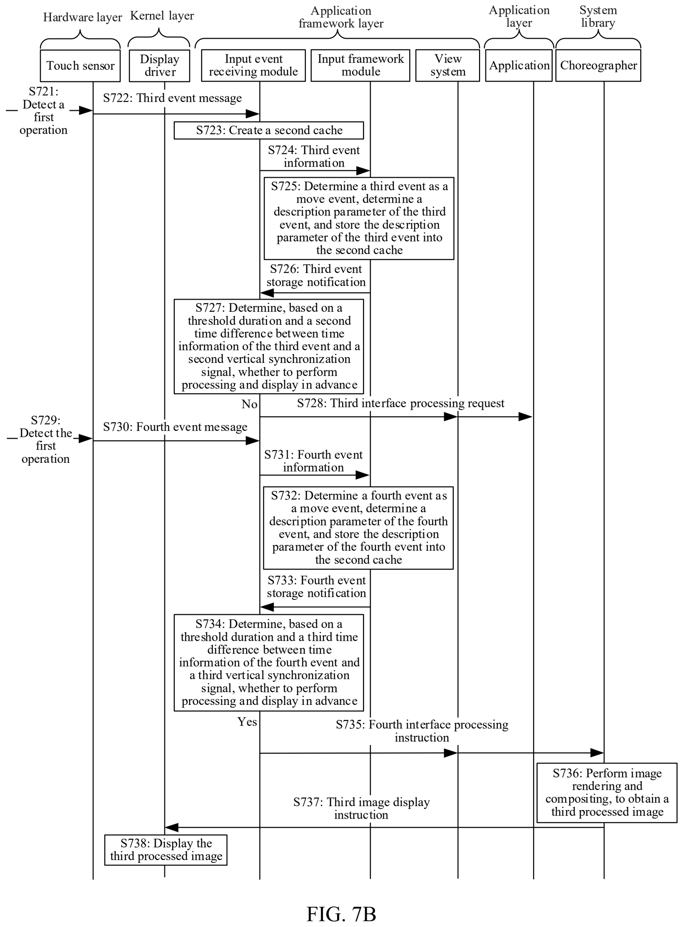

FIG. 7B shows a process in which the electronic device detects the first operation for the third time and detects the first operation for the fourth time, and processes and displays a third event and a fourth event.

S721: The touch sensor detects the first operation.

For S721, refer to the related descriptions of S701 and S711. Details are not described again.

S722: The touch sensor sends a third event message to the input event receiving module.

For the third event, refer to the move event 2 in FIG. 6. For S722, refer to the related descriptions of S702 and S712. Details are not described again.

S723: The input event receiving module creates a second cache.

For S723, refer to the related descriptions of S703. Details are not described again.

S724: The input event receiving module sends third event information to the input framework module.

For S724, refer to the related descriptions of S713.

The third event information may include a second storage address of the second cache, and time information and coordinate information of the third event.

S725: The input framework module determines the third event as a move event, determines a description parameter of the third event, and stores the description parameter of the third event into the second cache.

For S725, refer to the related descriptions of S714. Details are not described again.

S726: The input framework module sends a third event storage notification to the input event receiving module.

For S726, refer to the related descriptions of S715. Details are not described again.

S727: The input event receiving module determines, based on threshold duration and a second time difference between the time information of the third event and a second vertical synchronization signal, whether to perform processing and display in advance.

For the determining process of S727, refer to the related content of S716. Details are not described again.

In this case, when it is determined that the second time difference between the time information of the third event and the second vertical synchronization signal is greater than the threshold duration, and it is determined that the processing does not need to be performed in advance, S728 is performed. The output event receiving module may send an interface processing instruction to the application by using the view system, and the application triggers processing and display according to a refreshing periodicity.

For S727, refer to the related descriptions of S716 and S706. Details are not described again.

S728: The input event receiving module sends a third interface processing request to the application by using the view system.

When it is determined in S727 that the processing does not need to be performed in advance, the input event receiving module may send the third interface processing request to the application by using the view system. Correspondingly, the application may receive, by using the view system, the third interface processing request from the input event receiving module.

The application may periodically trigger processing of a move event in the cache based on the vsync. Currently, the application has not triggered a response to the move event.

S729: The touch sensor detects the first operation.

S730: The touch sensor sends a fourth event message to the input event receiving module.

For the fourth event, refer to the move event 3 in FIG. 6.

S731: The input event receiving module sends fourth event information to the input framework module.

S732: The input framework module determines the fourth event as a move event, determine a description parameter of the fourth event, and store the description parameter of the fourth event into the second cache.

S733: The input framework module sends a fourth event storage notification to the input event receiving module.

For processing processes of S729 to S733, refer to the related descriptions of the processing processes of S711 to S715 and S721 to S726. Details are not described again.

S734: The input event receiving module determines, based on threshold duration and a third time difference between time information of the fourth event and a third vertical synchronization signal, whether to perform processing and display in advance.

When it is determined to perform processing in advance, S725 is performed; and the output event receiving module may send an interface processing instruction to the application by using the view system, and the application triggers processing and display according to a refreshing periodicity.

When receiving the fourth event storage notification, the input event receiving module may determine that the third time difference between the time information of the fourth event and the third vertical synchronization signal is less than or equal to the threshold duration, and determine to perform processing in advance. For S734, refer to the related descriptions of S716 and S727.

In this case, if it is determined that the processing and display needs to be performed in advance, perform S735.

S735: The input framework module sends a fourth interface processing instruction to the application by using the view system.

In S734, it is determined that S735 needs to be performed. Therefore, the input framework module may send the fourth interface processing instruction to the application by using the view system. Correspondingly, the application may receive, by using the view system, the fourth interface processing instruction from the input framework module. When obtaining a vertical synchronization signal, the application sends a third interface processing instruction to the choreographer by using the view system.

For S735, refer to the related descriptions of S717. Details are not described again.

S736: The choreographer performs image rendering and compositing, to obtain a third processed image.

S737: The choreographer sends a third image display instruction to the display driver.

S738: The display driver displays the third processed image.

For processing processes of S736 to S738, refer to the related descriptions of S708 to S710 and S718 to S720. Details are not described again.

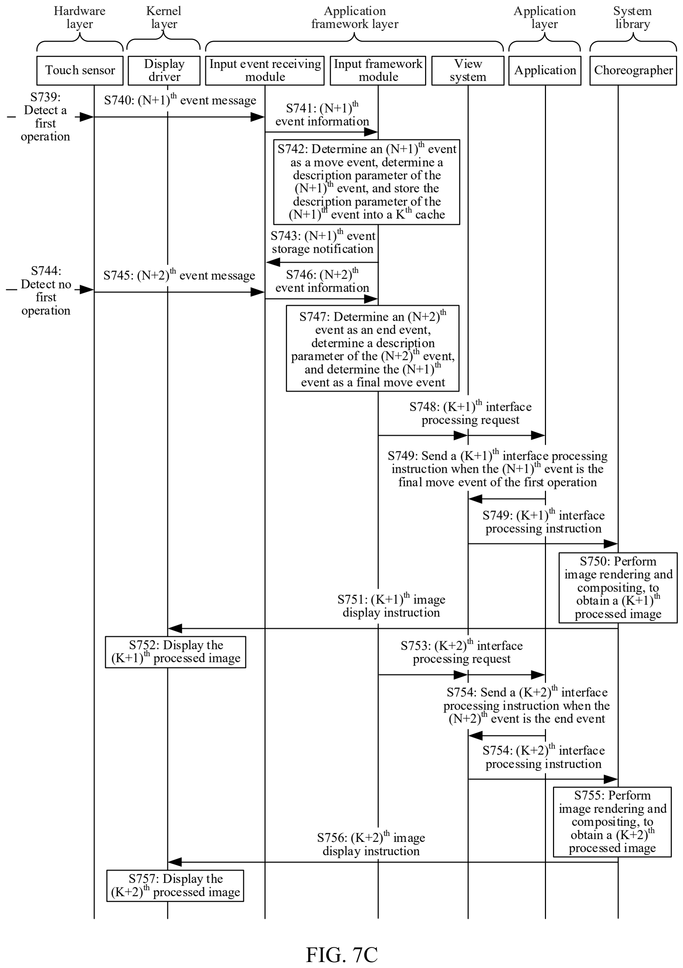

FIG. 7C shows a process in which the electronic device detects the first operation for the (N+1)^{th} time (the operation is detected for the last time, in other words, this event is a final move event) and does not detect the first operation (the operation is not detected for the first time), and processes and displays an (N+1)^{th} event and an (N+2)^{th} event.

S739: The touch sensor detects the first operation.

S740: The touch sensor sends an (N+1)^{th} event message to the input event receiving module.

The (N+1)^{th} event corresponds to the move event N in FIG. 6.

S741: The input event receiving module sends (N+1)^{th} event information to the input framework module.

S742: The input framework module determines the (N+1)^{th} event as a move event, determines a description parameter of the (N+1)^{th} event, and stores the description parameter of the (N+1)^{th} event into a K^{th} cache.

S743: The input framework module sends an (N+1)^{th} event storage notification to the input event receiving module.

For processing processes of S739 to S743, refer to the related descriptions of S711 to S715 and S729 to S733. Details are not described again.

S744: The touch sensor does not detect the first operation.

In FIG. 6, at the moment T8, the user operation ends, and at the moment T9, the electronic device cannot detect the first operation by using the touch sensor. It should be noted that, in previous acquisition at the moment T7, the electronic device can detect the first operation.

S745: The touch sensor sends an (N+2)^{th} event message to the input event receiving module.

The (N+2)^{th} event corresponds to the end event in FIG. 6.

S746: The input event receiving module sends (N+2)^{th} event information to the input framework module.

For S745 and S746, refer to the related descriptions of S702 and S704. Details are not described again.

S747: The input framework module determines the (N+2)^{th} event as an end event, determines a description parameter of the (N+2)^{th} event, and determines the (N+1)^{th} event as a final move event.

For the process of determining the (N+2)^{th} event as the end event and determining the description parameter of the (N+2)^{th} event in S747, still refer to the related descriptions in S705. In addition, the input framework module determines the (N+2)^{th} event as the end event, so that it can be determined that the (N+1)^{th} event is the final move event.

S748: The input framework module sends a (K+1)^{th} interface processing request to the application by using the view system.

For details of S748, refer to the related descriptions of S728. The (K+1)^{th} interface processing request may include identification information indicating that the (N+1)^{th} event is the final move event. The (K+1)^{th} interface processing request is used for requesting immediate processing of a move event currently in the K^{th} cache.

S749: The application sends a (K+1)^{th} interface processing instruction to the choreographer by using the view system when the (N+1)^{th} event is the final move event of the first operation.

For details of S749, refer to the related descriptions of S707.

Optionally, an execution process of S748 and S749 may be as follows: When determining that the (N+1)^{th} event is the final move event, the input framework module may send the (K+1)^{th} interface processing instruction to the choreographer by using the view system. Correspondingly, the choreographer may receive the (K+1)^{th} interface processing instruction from the input framework module by using the view system.

S750: The choreographer performs image rendering and compositing, to obtain a (K+1)^{th} processed image.

S751: The choreographer sends a (K+1)^{th} image display instruction to the display driver.

S752: The display driver displays the (K+1)^{th} processed image.

For S750 to S752, refer to the related descriptions of S708 to S710, S718 to S720, and S736 to S738. Details are not described again.

S753: The input framework module sends a (K+2)^{th} interface processing request to the application by using the view system.

The (K+2)^{th} interface processing request is used for requesting to performing processing and display for the end event.

S754: The application sends a (K+2)^{th} interface processing instruction to the choreographer by using the view system when the (N+2)^{th} event is the end event.

S755: The choreographer performs image rendering and compositing, to obtain a (K+2)^{th} processed image.

The (K+1)^{th} interface processing request is used for requesting immediate processing of a move event currently in the K^{th} cache.

S756: The choreographer sends a (K+2)^{th} image display instruction to the display driver.

S757: The display driver displays the (K+2)^{th} processed image.

For processes of S755 to S757, refer to the related descriptions of S708 to S710, S718 to S720, and S736 to S738. Details are not described again.

In the foregoing implementation, when obtaining a move event storage notification, the input event receiving module determines, based on a time difference between event time and vsync time, whether to perform processing in advance. When the processing needs to be triggered in advance, the choreographer performs the processing immediately, and does not need to wait for arrival of the vsync, to ensure a faster response of the move event. In the game shown in FIG. 2A and FIG. 2B, and in the process of grabbing the red packet in FIG. 3A to FIG. 3E, the foregoing processing manner can accelerate the processing process, refreshing and processing of the interface of the electronic device are performed in advance, game experience is better, or a probability of grabbing the red packet is higher, thereby optimizing use experience of the user.

It should be noted that, in this embodiment of this application, the determining whether to perform processing and display in advance may be processed by the input event receiving module in FIG. 7A to FIG. 7C, or certainly, may be performed by the input framework module, the application, or the view system.

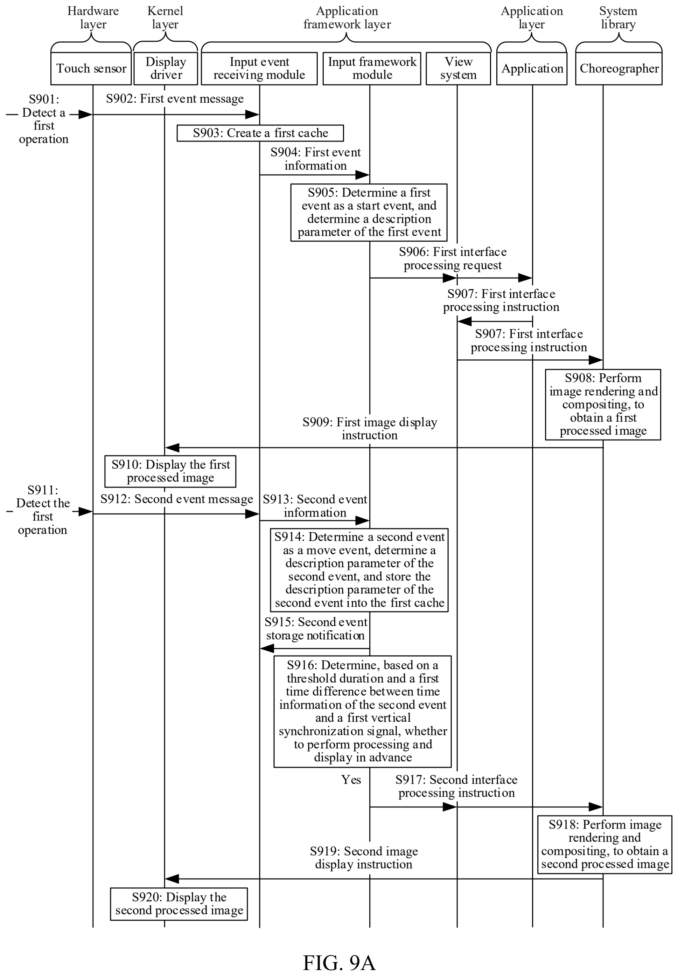

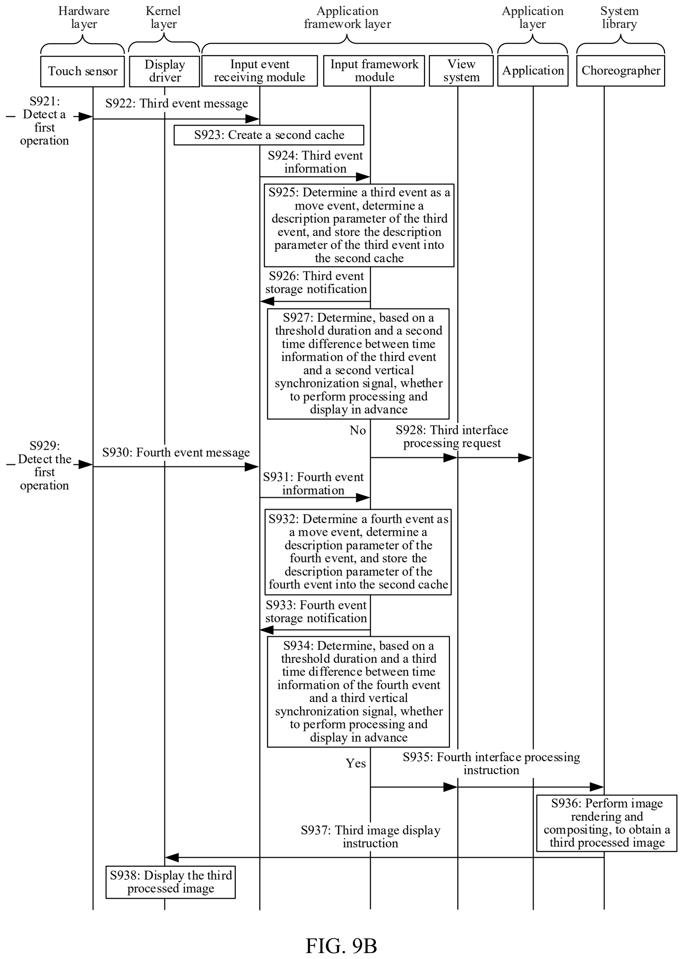

FIG. 9A and FIG. 9B are schematic flowcharts of another interface drawing method disclosed in an embodiment of this application. As shown in FIG. 9A and FIG. 9B, the interface drawing method may include but is not limited to the following steps:
FIG. 9A shows: A user starts a first operation, and an electronic device periodically acquires a user operation, detects the first operation for the first time, and obtains a first event; and detects the first operation for the second time, and obtains a second event. For processing processes of the first event and the second event:
S901 to S910 are the processing process performed by the electronic device after detecting the first operation for the first time (detect a start event, and perform processing and display immediately):
S901: A touch sensor detects the first operation.
S902: The touch sensor sends a first event message to an input event receiving module.
S903: The input event receiving module creates a first cache.
S904: The input event receiving module sends first event information to an input framework module.
S905: The input framework module determines the first event as a start event, and determine a description parameter of the first event.
S906: The input framework module sends a first interface processing request to an application by using a view system.
S907: The application sends a first interface processing instruction to a choreographer by using the view system.
S908: The choreographer performs image rendering and compositing, to obtain a first processed image.
S909: The choreographer sends a first image display instruction to a display driver.
S910: The display display driver displays the first processed image.

For specific descriptions of S901 to S910, refer to related descriptions of S701 to S710. Details are not described again.

S911 to S920 are the processing process performed by the electronic device when detecting the move event of the first operation:
S911: The touch sensor detects the first operation.
S912: The touch sensor sends a second event message to the input event receiving module.
S913: The input event receiving module sends second event information to the input framework module.
S914: The input framework module determines the second event as a move event, determines a description parameter of the second event, and stores the description parameter of the second event into the first cache.
S915: The input framework module sends a second event storage notification to the input event receiving module.
S916: The input framework module determines, based on threshold duration and a first time difference between time information of the second event and a first vertical synchronization signal, whether to perform processing and display in advance.

In this case, the input framework module performs the process of determining whether to perform processing and display in advance. A determining logic thereof is the same as that in S716, and details are not described again.

S917: The input framework module sends a second interface processing instruction to the choreographer by using the view system.

S918: The choreographer performs image rendering and compositing, to obtain a second processed image.

S919: The choreographer sends a second image display instruction to the display driver.

S920: The display driver displays the second processed image.

For specific descriptions of S911 to S920, refer to related descriptions of S711 to S720. Details are not described again.

FIG. 9B shows a process in which the electronic device detects the first operation for the third time and detects the first operation for the fourth time, and processes and displays a third event and a fourth event.

S921: The touch sensor detects the first operation.

S922: The touch sensor sends a third event message to the input event receiving module.

S923: The input event receiving module creates a second cache.

S924: The input event receiving module sends third event information to the input framework module.

S925: The input framework module determines the third event as a move event, determines a description parameter of the third event, and stores the description parameter of the third event into the second cache.

S926: The input framework module sends a third event storage notification to the input event receiving module.

S927: The input framework module determines, based on threshold duration and a second time difference between time information of the third event and a second vertical synchronization signal, whether to perform processing and display in advance.

S928: The input framework module sends a third interface processing request to the application by using the view system.

S929: The touch sensor detects the first operation.

S930: The touch sensor sends a fourth event message to the input event receiving module.

S931: The input event receiving module sends fourth event information to the input framework module.

S932: The input framework module determines the fourth event as a move event, determine a description parameter of the fourth event, and store the description parameter of the fourth event into the second cache.

S933: The input framework module sends a fourth event storage notification to the input event receiving module.

S934: The input framework module determines, based on threshold duration and a third time difference between time information of the fourth event and a third vertical synchronization signal, whether to perform processing and display in advance.

S935: The input framework module sends a fourth interface processing instruction to the choreographer by using the view system.

S936: The choreographer performs image rendering and compositing, to obtain a third processed image.

S937: The choreographer sends a third image display instruction to the display driver.

S938: The display driver displays the third processed image.

For specific descriptions of S921 to S938, refer to the related descriptions of S721 to S738.

A process in which the electronic device detects the first operation for the (N+1)^{th} time (the operation is detected for the last time, in other words, this event is a final move event) and does not detect the first operation (the operation is not detected for the first time), and processes and displays an (N+1)^{th} event and an (N+2)^{th} event. After S938, the electronic device may further perform S939 to S956 (not shown in the figure). For details, refer to content of steps S739 to S757 in FIG. 7C, and details are not described again.

In the embodiment in FIG. 9A and FIG. 9B, the input framework module determines, based on the threshold duration and the time difference between the time information of the input event and the vertical synchronization signal, whether to perform processing and display in advance. When it is determined that processing and display need to be performed in advance, the input framework module may send the fourth interface processing instruction to the choreographer by using the view system.

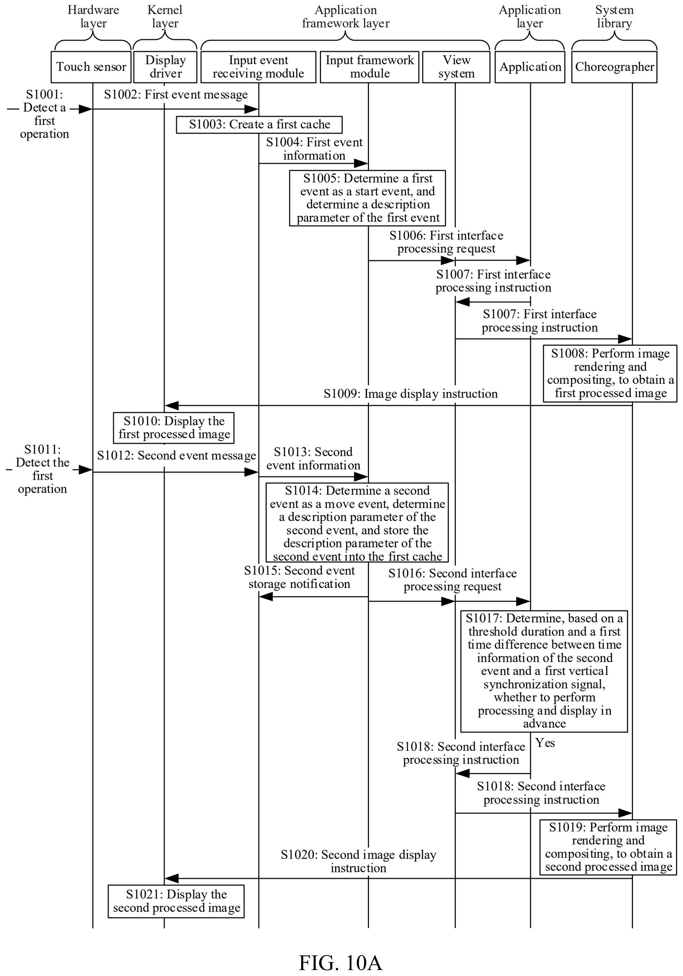

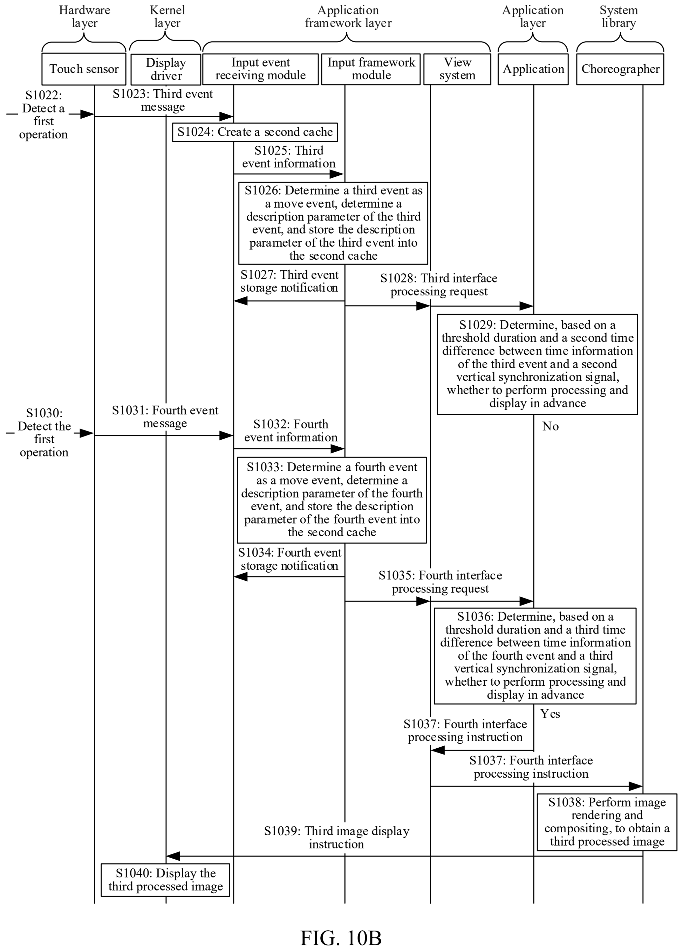

FIG. 10A and FIG. 10B are schematic flowcharts of still another interface drawing method disclosed in an embodiment of this application. As shown in FIG. 10A and FIG. 10B, the interface drawing method may include but is not limited to the following steps:
FIG. 10A shows: A user starts a first operation, and an electronic device periodically acquires a user operation, detects the first operation for the first time, and obtains a first event; and detects the first operation for the second time, and obtains a second event. For processing processes of the first event and the second event:
S1001 to S1010 are the processing process performed by the electronic device after detecting the first operation for the first time (detect a start event, and perform processing and display immediately):
S1001: A touch sensor detects the first operation.
S1002: The touch sensor sends a first event message to an input event receiving module.
S1003: The input event receiving module creates a first cache.
S1004: The input event receiving module sends first event information to an input framework module.
S1005: The input framework module determines the first event as a start event, and determine a description parameter of the first event.
S1006: The input framework module sends a first interface processing request to an application by using a view system.
S1007: The application sends a first interface processing instruction to a choreographer by using the view system.
S1008: The choreographer performs image rendering and compositing, to obtain a first processed image.
S1009: The choreographer sends a first image display instruction to a display driver.
S1010: The display display driver displays the first processed image.

For specific descriptions of S1001 to S1010, refer to related descriptions of S701 to S710. Details are not described again.

S1011 to S1020 are the processing process performed by the electronic device when detecting the move event of the first operation:
S1011: The touch sensor detects the first operation.
S1012: The touch sensor sends a second event message to the input event receiving module.
S1013: The input event receiving module sends second event information to the input framework module.
S1014: The input framework module determines the second event as a move event, determines a description parameter of the second event, and stores the description parameter of the second event into the first cache.
S1015: The input framework module sends a second event storage notification to the input event receiving module.

For S1011 to S1015, refer to the related descriptions of S711 to S715. Details are not described again.

S1016: The input framework module sends a second interface processing request to the application by using the view system.

The input framework module may send the second interface processing request to the application by using the view system. Correspondingly, the application may receive, by using the view system, the second interface processing request from the input framework module. The second interface processing request may be used for requesting to process the second event.

S1017: The application determines, based on threshold duration and a first time difference between time information of the second event and a first vertical synchronization signal, whether to perform processing and display in advance.

When the application determines that a type of the second event is the move event, the application may start to perform the process of S1017. If determining that the processing and display need to be performed in advance, the application performs S1018. For the specific determining process, refer to the related descriptions of S716. Details are not described again.

S1018: The application sends a second interface processing instruction to a choreographer by using the view system.

The application may send the second interface processing instruction to the choreographer by using the view system. Correspondingly, the choreographer may receive the second interface processing instruction from the application by using the view system.

S1019: The choreographer performs image rendering and compositing, to obtain a second processed image.

S1020: The choreographer sends a second image display instruction to the display driver.

S1021: The display driver displays the second processed image.

For S1019 to S1021, refer to the related descriptions of S718 to S720. Details are not described again.

FIG. 10B shows a process in which the electronic device detects the first operation for the third time and detects the first operation for the fourth time, and processes and displays a third event and a fourth event.

S1022: The touch sensor detects the first operation.

S1023: The touch sensor sends a third event message to the input event receiving module.

S1024: The input event receiving module creates a second cache.

S1025: The input event receiving module sends third event information to the input framework module.

S1026: The input framework module determines the third event as a move event, determines a description parameter of the third event, and stores the description parameter of the third event into the second cache.

S1027: The input framework module sends a third event storage notification to the input event receiving module.

For S1022 to S1027, refer to the related descriptions of S721 to S726. Details are not described again.

S1028: The input framework module sends a third interface processing request to the application by using the view system.

The input framework module may send the third interface processing request to the application by using the view system. Correspondingly, the application may receive, by using the view system, the third interface processing request from the input framework module. The third interface processing request is used for instructing to process the third event.

S1029: The application determines, based on threshold duration and a second time difference between time information of the third event and a second vertical synchronization signal, whether to perform processing and display in advance.

When the application determines that a type of the third event is the move event, the application may start to perform the process of S1029. If determining that the processing and display do not need to be performed in advance, the application waits for a next vertical synchronization signal. For the specific determining process, refer to the related descriptions of S716. Details are not described again.

S1030: The touch sensor detects the first operation.

S1031: The touch sensor sends a fourth event message to the input event receiving module.

S1032: The input event receiving module sends fourth event information to the input framework module.

S1033: The input framework module determines the fourth event as a move event, determine a description parameter of the fourth event, and store the description parameter of the fourth event into the second cache.

S1034: The input framework module sends a fourth event storage notification to the input event receiving module.

For S1030 to S1034, refer to the related descriptions of S729 to S733. Details are not described again.

S1035: The input framework module sends a fourth interface processing request to the application by using the view system.

The input framework module may send the fourth interface processing request to the application by using the view system. Correspondingly, the application may receive, by using the view system, the fourth interface processing request from the input framework module. The fourth interface processing request is used for instructing to process the fourth event.

S1036: The application determines, based on threshold duration and a third time difference between time information of the fourth event and a third vertical synchronization signal, whether to perform processing and display in advance.

When the application determines that the type of the third event is the move event, the application may start to perform the process of S1036. If determining that the processing and display need to be performed in advance, the application performs S1037. For the specific determining process, refer to the related descriptions of S716. Details are not described again.

S1037: The application sends a fourth interface processing instruction to the choreographer by using the view system.

The application may send the fourth interface processing instruction to the choreographer by using the view system. Correspondingly, the choreographer may receive the fourth interface processing instruction from the application by using the view system.

S1038: The choreographer performs image rendering and compositing, to obtain a third processed image.

S1039: The choreographer sends a third image display instruction to the display driver.

S1040: The display driver displays the third processed image.

For specific descriptions of S1038 to S1040, refer to the related descriptions of S718 to S720.

A process in which the electronic device detects the first operation for the (N+1)^{th} time (the operation is detected for the last time, in other words, this event is a final move event) and does not detect the first operation (the operation is not detected for the first time), and processes and displays an (N+1)^{th} event and an (N+2)^{th} event. After performing S1040, the electronic device may further perform S1041 to S1058 (not shown in the figure). For details, refer to content of steps S739 to S757 in FIG. 7C, and details are not described again.

In the embodiment in FIG. 10A and FIG. 10B, the application determines, based on the threshold duration and the time difference between the time information of the input event and the vertical synchronization signal, whether to perform processing and display in advance. When it is determined that processing and display need to be performed in advance, the application may deliver the interface processing instruction.

As used in the foregoing embodiments, based on the context, the term "when" may be interpreted as a meaning of "if", "after", "in response to determining ...", or "in response to detecting ...". Similarly, based on the context, the phrase "when determining ..." or "if detecting (a stated condition or event)" may be interpreted as a meaning of "if determining ...", "in response to determining ...", "when detecting (a stated condition or event)", or "in response to detecting (a stated condition or event)".

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, a DVD), a semiconductor medium (for example, a solid-state drive), or the like.

A person of ordinary skill in the art may understand that all or some of the procedures in the methods in the embodiments may be implemented by using a computer program instructing relevant hardware. The program may be stored in a computer-readable storage medium. When the program is executed, the procedures in the foregoing method embodiments may be performed. The foregoing storage medium includes any medium that can store program code, such as a ROM, a random access memory RAM, a magnetic disk, or an optical disc.

## Claims

1. A display method, wherein the method is applied to an electronic device, and the method comprises:
obtaining a start event of a first operation of a user;
displaying a first image in response to the start event of the first operation;
obtaining a first move event of the first operation;
displaying a second image in response to the first move event when first duration is less than or equal to threshold duration, wherein
the first duration is a time difference between first detection time of the first move event and a first vertical synchronization signal, and the first vertical synchronization signal is a vertical synchronization signal after the first detection time and closest to the first detection time.

2. The method according to claim 1, wherein the method further comprises:
obtaining a second move event of the first operation when the first duration is greater than the threshold duration; and
determining, in response to the second move event, whether second duration is less than or equal to the threshold duration, wherein
the second duration is a time difference between second detection time of the second move event and a second vertical synchronization signal, the second vertical synchronization signal is a vertical synchronization signal after the second detection time and closest to the second detection time, and the second detection time is after the first detection time.

3. The method according to claim 1 or 2, wherein the method further comprises:
detecting an input event of a user operation based on an acquisition periodicity; and
when the electronic device does not detect the user operation at a first moment, determining that no input event of the user operation exists; and
the obtaining a start event of a first operation of a user comprises:
when the electronic device detects the user operation at a second moment, and when a previous acquisition result is that no user operation is detected, obtaining the start event of the first operation, wherein
the first moment and the second moment are spaced by one acquisition periodicity, and the first moment is before the second moment.

4. The method according to claim 3, wherein the obtaining a first move event of the first operation comprises:
when the electronic device detects the user operation at an X^{th} moment, and when a previous acquisition result is that the user operation is detected, obtaining the first move event of the first operation, wherein
the X^{th} moment is after the second moment.

5. The method according to claim 3, wherein the method further comprises:
when the electronic device detects the user operation at a K^{th} moment, and when a previous acquisition result is that the user operation is detected, obtaining a move event of the first operation; and
when the electronic device detects no user operation at a (K+1)^{th} moment, and when a previous acquisition result is that the user operation is detected, obtaining an end event of the first operation, wherein
the K^{th} moment and the (K+1)^{th} moment are after the second moment, the K^{th} moment and the (K+1)^{th} moment are spaced by one acquisition periodicity, and the (K+1)^{th} moment is after the K^{th} moment.

6. The method according to claim 5, wherein the method further comprises:
when the first duration is greater than the threshold duration, waiting for detection in a next acquisition periodicity; and
if the electronic device obtains a fourth move event at the K^{th} moment; and
the electronic device detects no user operation at the (K+1)^{th} moment, determining that the fourth move event is a final move event, and displaying a third image, wherein
fourth detection time of the fourth move event is before a third vertical synchronization signal, and the third vertical synchronization signal is a vertical synchronization signal after the fourth detection time and closest to the fourth detection time.

7. The method according to claim 5, wherein when the end event of the first operation is obtained, the method further comprises:
displaying a fourth image in response to the end event.

8. The method according to any one of claims 3 to 7, wherein the threshold duration is the acquisition periodicity.

9. The method according to claim 1, wherein the method further comprises:
creating a first cache, wherein the first cache comprises description information of a third move event; and
after the obtaining a first move event of the first operation, the method further comprises:
obtaining description information of the first move event, wherein the description information comprises detection time, coordinate information, and an event type of the first move event; and
storing the description information of the first move event in the first cache.

10. The method according to claim 9, wherein when the first duration is less than or equal to the threshold duration, the method further comprises:
determining a target move event from move events in the first cache; and
performing image rendering and compositing based on the target move event, to obtain a second processed image, wherein the second image comprises the second processed image.

11. The method according to claim 9, wherein the electronic device comprises an input framework module, an input event receiving module, and a display, and the creating a first cache comprises:
when the user operation is detected, if a cache is not created yet, creating the first cache by using the input event receiving module; and
sending event information to the input framework module by using the input event receiving module;
the obtaining description information of the first move event, and storing the description information of the first move event in a first cache comprises:
determining the description information of the first move event by using the input framework module based on the event information, and storing the description information of the first move event in the first cache; and
sending an event storage notification to the input event receiving module by using the input framework module; and
the displaying a second image when first duration is less than or equal to threshold duration comprises:
determining, by using the input event receiving module, that the first duration is less than or equal to the threshold duration, and displaying the second image by using the display.

12. An electronic device, comprising: one or more processors and one or more memories, wherein the one or more processors are coupled to the one or more memories, the one or more memories are configured to store computer program code, the computer program code comprises computer instructions, and when the one or more processors execute the computer instructions, the electronic device is enabled to perform the method according to any one of claims 1 to 11.

13. A computer-readable storage medium, wherein the computer-readable storage medium stores a computer program, and the computer program is executed by a processor to implement the method according to any one of claims 1 to 11.
